# EUROPEAN PATENT APPLICATION

(11) **EP 4 694 091 A1**
(43) Date of publication of application: **11.02.2026**
(21) Application number: 24795803.6
(22) Date of filing: 07.04.2024
(51) Int. Cl.: H04L 67/60

(54) **SOFTWARE MODULE RUNNING METHOD AND APPARATUS, AND STORAGE MEDIUM**

(30) Priority: 24.04.2023 CN 202310449632; 24.04.2023 CN 202310449545; 24.04.2023 CN 202310449857; 27.07.2023 CN 202310934312
(71) Applicant: Huawei Cloud Computing Technologies Co., Ltd., Guiyang, Guizhou 550025 (CN)
(72) Inventor: LU, Duojun, Guiyang, Guizhou 550025 (CN); WU, Hailiang, Guiyang, Guizhou 550025 (CN); HUANG, Xiaojie, Guiyang, Guizhou 550025 (CN); CAO, Kaile, Guiyang, Guizhou 550025 (CN); YANG, Xiaoyong, Guiyang, Guizhou 550025 (CN); LV, Juntao, Guiyang, Guizhou 550025 (CN); WANG, Gang, Guiyang, Guizhou 550025 (CN)
(74) Representative: Gill Jennings & Every LLP
(86) International application number: PCT/CN2024/086308
(87) International publication number: WO 2024/222422

(57) **Abstract**

This application discloses a software module running method and apparatus, and a storage medium, and pertains to the communication field. The method includes: obtaining a running request for a first software module, where the first software module is associated with a first user, the running request for the first software module is to run the first software module that has been deployed in a first computing instance set, or deploy the first software module in a provisioned first computing instance set for running, or provision a first computing instance set for the first software module and run the first software module by using the first computing instance set, and the first computing instance set includes at least one computing instance; obtaining a first cloud resource authorization specification corresponding to the first software module; and if a sum of cloud resources occupied by a second computing instance set does not exceed the first cloud resource authorization specification, running the first software module by using the first computing instance set, where the second computing instance set includes the first computing instance set. This application can avoid causing an economic loss to a software vendor.

## Description

This application claims priority to Chinese Patent Application No. 202310449545.X, filed on April 24, 2023 and entitled "SOFTWARE AUTHORIZATION METHOD, APPARATUS, AND SYSTEM", which is incorporated herein by reference in its entirety. This application claims priority to Chinese Patent Application No. 202310449857.0, filed on April 24, 2023 and entitled "SOFTWARE AUTHORIZATION METHOD, APPARATUS, AND SYSTEM", which is incorporated herein by reference in its entirety. This application claims priority to Chinese Patent Application No. 202310449632.5, filed on April 24, 2023 and entitled "SOFTWARE AUTHORIZATION METHOD, APPARATUS, AND SYSTEM", which is incorporated herein by reference in its entirety. This application claims priority to Chinese Patent Application No. 202310934312.9, filed on July 27, 2023 and entitled "SOFTWARE MODULE RUNNING METHOD AND APPARATUS, AND STORAGE MEDIUM", which is incorporated herein by reference in its entirety.

### TECHNICAL FIELD

This application relates to the communication field, and in particular, to a software module running method and apparatus, and a storage medium.

### BACKGROUND

As cloud computing technologies become increasingly mature, the transaction market of cloud computing resources continues to grow. Resource types of transactions include computing, storage, networking, software assets, and the like. In these transactions, there is an increasingly frequent type of transaction for the right to use a software module.

A software module vendor may upload a software module to a cloud store. A user may purchase the software module from the cloud store, deploy the software module on a computing instance on a cloud service platform, and run the software module by using the computing instance.

However, currently, the user may expand, without limit, resources occupied by the computing instance used to run the software module, to expand a use range of the software module. This causes an economic loss to the software vendor.

### SUMMARY

This application provides a software module running method and apparatus, and a storage medium, to avoid causing an economic loss to a software vendor. The technical solutions are as follows:

According to a first aspect, this application provides a software module running method. In the method, a running request for a first software module is obtained, where the first software module is associated with a first user, the running request for the first software module is to run the first software module that has been deployed in a first computing instance set, or deploy the first software module in a provisioned first computing instance set for running, or provision a first computing instance set for the first software module and run the first software module by using the first computing instance set, and the first computing instance set includes at least one computing instance; a first cloud resource authorization specification corresponding to the first software module is obtained; and if a sum of cloud resources occupied by a second computing instance set does not exceed the first cloud resource authorization specification, the first software module is run by using the first computing instance set, where the second computing instance set includes the first computing instance set.

The first cloud resource authorization specification is a resource specification authorized for running of the first software module, and the second computing instance set includes the first computing instance set. Therefore, the running request for the first software module is received; the first cloud resource authorization specification corresponding to the first software module is obtained; and when the sum of cloud resources occupied by the second computing instance set does not exceed the first cloud resource authorization specification, the first software module is run by using the first computing instance set. In this way, expansion of a resource occupied for running the first software module can be avoided, to avoid expanding a use range of the first software module, and avoid causing an economic loss to a software vendor.

In a possible implementation, the second computing instance set further includes a third computing instance set, and the third computing instance set includes at least one computing instance on which the first software module has been run. In this way, when the sum of cloud resources occupied by the second computing instance set does not exceed the first cloud resource authorization specification, the first software module is run by using the first computing instance set, to avoid expanding the use range of the first software module, and avoid causing an economic loss to the software vendor.

In another possible implementation, the running request for the first software module is to run the first software module that has been deployed in the first computing instance set; and if the sum of cloud resources occupied by the second computing instance set exceeds the first cloud resource authorization specification, running of the first software module is rejected. This avoids expansion of a resource occupied for running the first software module.

In another possible implementation, the running request for the first software module is to deploy the first software module in the provisioned first computing instance set for running; and if the sum of cloud resources occupied by the second computing instance set exceeds the first cloud resource authorization specification, deployment of the first software module is rejected. This avoids expansion of a resource occupied for deploying the first software module.

In another possible implementation, the running request for the first software module is to provision the first computing instance set for the first software module and run the first software module by using the first computing instance set; and if the sum of cloud resources occupied by the second computing instance set exceeds the first cloud resource authorization specification, provisioning of the first computing instance set is rejected. This avoids expansion of a resource occupied for provisioning the first software module.

In another possible implementation, an authorization code corresponding to the first software module is obtained; and the first cloud resource authorization specification is obtained from a first correspondence based on the authorization code, where the first correspondence includes the authorization code and the first cloud resource authorization specification. In this way, the first cloud resource authorization specification can be obtained by using the authorization code.

In another possible implementation, the first correspondence further includes identification information of the first software module; the identification information of the first software module is obtained; and the first cloud resource authorization specification is obtained from the first correspondence based on the authorization code and the identification information. This improves accuracy of obtaining the first cloud resource authorization specification.

In another possible implementation, an authorization code corresponding to the first software module is obtained, where the authorization code is obtained by encrypting the first cloud resource authorization specification by using a private key; and the authorization code is decrypted by using a public key corresponding to the private key, to obtain the first cloud resource authorization specification. In this way, the first cloud resource authorization specification can be obtained by using the authorization code.

In another possible implementation, the first cloud resource authorization specification includes a quantity of computing instances and a resource specification occupied by a single computing instance; and a case in which the sum of cloud resources occupied by the second computing instance set does not exceed the first cloud resource authorization specification includes: a quantity of computing instances included in the second computing instance set does not exceed the quantity of computing instances, and a resource specification occupied by each computing instance included in the second computing instance set does not exceed the resource specification occupied by the single computing instance. In this way, it is ensured that the sum of cloud resources occupied by the second computing instance set does not exceed the first cloud resource authorization specification, to avoid expansion of a resource occupied for running the first software module.

In another possible implementation, the computing instance included in the second computing instance set is a container, the container included in the second computing instance set belongs to at least one container set, and the first cloud resource authorization specification further includes one or more of the following: a quantity of serving gateways, a quantity of namespaces, a quantity of container sets, or a quantity of machines; and the case in which the sum of cloud resources occupied by the second computing instance set does not exceed the first cloud resource authorization specification further includes one or more of the following cases: a quantity of serving gateways that communicate with the container included in the second computing instance set does not exceed the quantity of serving gateways, a quantity of the at least one container set does not exceed the quantity of container sets, a quantity of machines on which the container included in the second computing instance set is located does not exceed the quantity of machines, or a quantity of namespaces to which the at least one container set belongs does not exceed the quantity of namespaces.

In another possible implementation, the first cloud resource authorization specification includes one or more of the following: a quantity of embedded neural-network processing units NPUs, a quantity of graphics processing units GPUs, a quantity of central processing units CPUs, a quantity of CPU cores, a memory size, a network bandwidth size, a quantity of network interfaces, or a storage volume size.

In another possible implementation, a running range authorized for the first software module is obtained; and the first software module is run by using the first computing instance set within the running range. In this way, the running range for running the first software module is controlled, to ensure economic interests of the software vendor.

In another possible implementation, the running range includes one or more of the following: total running duration of the first software module, a total quantity of invocations of the first software module, or a total concurrency quantity of the first software module.

In another possible implementation, the second computing instance set includes one or more of the following computing instances: a virtual machine, a bare metal server, or a container.

According to a second aspect, this application provides a software module running apparatus, configured to perform the method in any one of the first aspect or the possible implementations of the first aspect. Specifically, the apparatus includes units configured to perform the method in any one of the first aspect or the possible implementations of the first aspect.

According to a third aspect, this application provides a computing device cluster. The cluster includes at least one computing device, and each of the at least one computing device includes at least one processor and at least one storage. The at least one storage stores computer-readable instructions, and the at least one processor executes the computer-readable instructions, to enable the cluster to implement the method in any one of the first aspect or the possible implementations of the first aspect.

According to a fourth aspect, this application provides a computer program product. The computer program product includes a computer program stored in a computer-readable storage medium, and the computer program is loaded by a processor to implement the method in any one of the first aspect or the possible implementations of the first aspect.

According to a fifth aspect, this application provides a computer-readable storage medium, configured to store a computer program. The computer program is loaded by a processor to perform the method in any one of the first aspect or the possible implementations of the first aspect.

According to a sixth aspect, this application provides a chip, including a storage and a processor. The storage is configured to store computer instructions, and the processor is configured to invoke the computer instructions from the storage and run the computer instructions, to perform the method in any one of the first aspect or the possible implementations of the first aspect.

### BRIEF DESCRIPTION OF DRAWINGS

FIG. 1 is a diagram of a structure of a cloud system according to an embodiment of this application;
FIG. 2 is a diagram of a structure of another cloud system according to an embodiment of this application;
FIG. 3 is a diagram of a structure of another cloud system according to an embodiment of this application;
FIG. 4 is a diagram of a structure of another cloud system according to an embodiment of this application;
FIG. 5 is a flowchart of a software module running method according to an embodiment of this application;
FIG. 6 is a flowchart of another software module running method according to an embodiment of this application;
FIG. 7 is a flowchart of another software module running method according to an embodiment of this application;
FIG. 8 is a flowchart of another software module running method according to an embodiment of this application;
FIG. 9 is a flowchart of another software module running method according to an embodiment of this application;
FIG. 10 is a diagram of a structure of a software module running apparatus according to Embodiment 4 of this application;
FIG. 11 is a diagram of a structure of a computing device according to an embodiment of this application;
FIG. 12 is a diagram of a structure of a cluster according to an embodiment of this application; and
FIG. 13 is a diagram of a structure of another cluster according to an embodiment of this application.

### DESCRIPTION OF EMBODIMENTS

The following further describes in detail implementations of this application with reference to accompanying drawings.

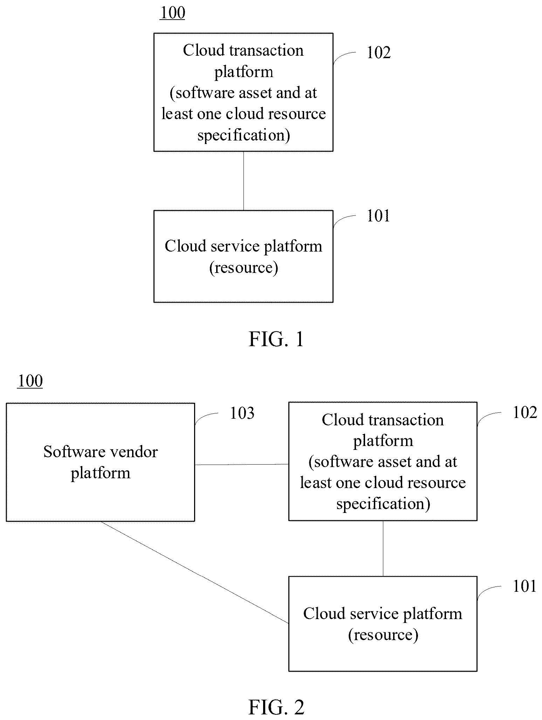

With reference to FIG. 1, an embodiment of this application provides a cloud system 100. The cloud system 100 includes a cloud service platform 101 and a cloud transaction platform 102. The cloud service platform 101 may communicate with the cloud transaction platform 102.

The cloud transaction platform 102 includes a software asset and at least one cloud resource specification to be transacted. The cloud service platform 101 includes a resource required for running a software module. The software module is the software asset or a part of the software asset. At least one computing instance may be created on the cloud service platform 101. Each computing instance occupies a resource on the cloud service platform 101, and the software module is run by using the computing instance.

For each user, for ease of description, the user is referred to as a first user, and the first user may purchase the software asset or a part of the software asset on the cloud transaction platform 102. For ease of description, the software asset or the part of the software asset purchased by the first user is referred to as a first software module, and the first user may purchase a cloud resource specification for the first software module from the at least one cloud resource specification on the cloud transaction platform 102.

When the first user purchases the first software module and the cloud resource specification, the cloud transaction platform 102 executes a transaction for the first software module and the cloud resource specification with the first user, and authorizes the cloud resource specification for the first software module. For ease of description, the cloud resource specification is referred to as a first cloud resource authorization specification. The cloud service platform 101 may run the first software module.

Optionally, the first software module may be run in the following three manners. The three manners are the following manner 1, manner 2, and manner 3.

Manner 1: The cloud service platform 101 includes a first computing instance set, the first computing instance set includes at least one computing instance, and the first software module has been deployed in the first computing instance set. When the first user activates the first software module deployed in the first computing instance set, the first software module is run.

Manner 2: The cloud service platform 101 includes a provisioned first computing instance set, the first computing instance set includes at least one computing instance, and the cloud transaction platform 102 deploys the first software module in the first computing instance set, and runs the first software module by using the first computing instance set.

Manner 3: The cloud service platform 101 provisions a first computing instance set for the first software module, where the first computing instance set includes at least one computing instance, and runs the first software module by using the first computing instance set.

In some embodiments, the first computing instance set includes one or more of the following computing instances: a container, a virtual machine, a bare metal server, or the like.

In some embodiments, after completing the transaction for the first software module and the first cloud resource authorization specification, the cloud transaction platform 102 may generate an authorization code and store a first correspondence. Optionally, the first correspondence includes the authorization code and the first cloud resource authorization specification, or the first correspondence includes the authorization code, identification information of the first software module, and the first cloud resource authorization specification, or the first correspondence includes the authorization code, identification information of the first software module, a user identifier of the first user, and the first cloud resource authorization specification.

In some embodiments, with reference to FIG. 2, the cloud system 100 further includes a software vendor platform 103. The software vendor platform 103 includes a software asset, and the software asset on the cloud transaction platform 102 is uploaded by the software vendor platform 103. After completing the transaction for the first software module and the first cloud resource authorization specification, the cloud transaction platform 102 generates a transaction order, where the transaction order includes the first cloud resource authorization specification and identification information of the first software module, and sends the transaction order to the software vendor platform 103. Optionally, the transaction order further includes a user identifier of the first user and/or the identification information of the first software module.

The software vendor platform 103 receives the transaction order, generates an authorization code, stores a first correspondence, and notifies the first user of the authorization code. Optionally, the first correspondence includes the authorization code and the first cloud resource authorization specification, or the first correspondence includes the authorization code, the identification information of the first software module, and the first cloud resource authorization specification, or the first correspondence includes the authorization code, the identification information of the first software module, the user identifier of the first user, and the first cloud resource authorization specification.

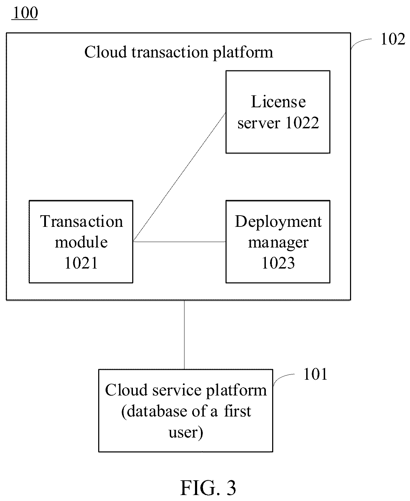

In some embodiments, with reference to FIG. 3, the cloud transaction platform 102 includes a transaction module 1021 and a license server (license server) 1022.

The transaction module 1021 is configured to: execute a transaction for the first software module and the cloud resource specification with the first user, and generate a transaction order after the transaction is completed. The transaction order includes identification information of the first software module and the cloud resource specification. Optionally, the transaction order may further include a user identifier of the first user. The transaction order is sent to the license server 1022.

The license server 1022 is configured to: receive the transaction order, and authorize the cloud resource specification included in the transaction order for the first software module. For ease of description, the cloud resource specification is referred to as a first cloud resource authorization specification.

In some embodiments, the license server 1022 may further generate an authorization code for the first software module. The authorization code is associated with the first cloud resource authorization specification.

In some embodiments, after generating the authorization code, the license server 1022 may further store a first correspondence, and notify the first user of the authorization code. Optionally, the first correspondence includes the authorization code and the first cloud resource authorization specification, or the first correspondence includes the authorization code, the identification information of the first software module, and the first cloud resource authorization specification, or the first correspondence includes the authorization code, the identification information of the first software module, the user identifier of the first user, and the first cloud resource authorization specification.

In some embodiments, the license server 1022 may encrypt the first cloud resource authorization specification to obtain the authorization code, and notify the first user of the authorization code.

In some embodiments, the license server 1022 may add the authorization code to the transaction order. In this way, the first user obtains the authorization code by viewing the transaction order. Alternatively, the license server 1022 sends an SMS message or an email to the first user, where the SMS message or the email includes the authorization code.

In some embodiments, with reference to FIG. 3, the cloud transaction platform 102 further includes a deployment manager 1023.

After authorizing the first cloud resource authorization specification for the first software module, the license server 1022 sends a request to the deployment manager 1023, where the request includes a module identifier of the first software module. The deployment manager 1023 is configured to: receive the request, and deploy the first software module on the cloud service platform 101 based on the identification information of the first software module.

In some embodiments, for the manner 1 or the manner 2, the cloud service platform 101 includes the first computing instance set associated with the user identifier of the first user, and the deployment manager 1023 obtains the first computing instance set, obtains the first software module based on the identification information of the first software module, and deploys the first software module in the first computing instance set.

In some embodiments, for the manner 3, the deployment manager 1023 provisions the first computing instance set on the cloud service platform 101, where the first computing instance set is associated with the user identifier of the first user, obtains the first software module based on the identification information of the first software module, and deploys the first software module in the first computing instance set.

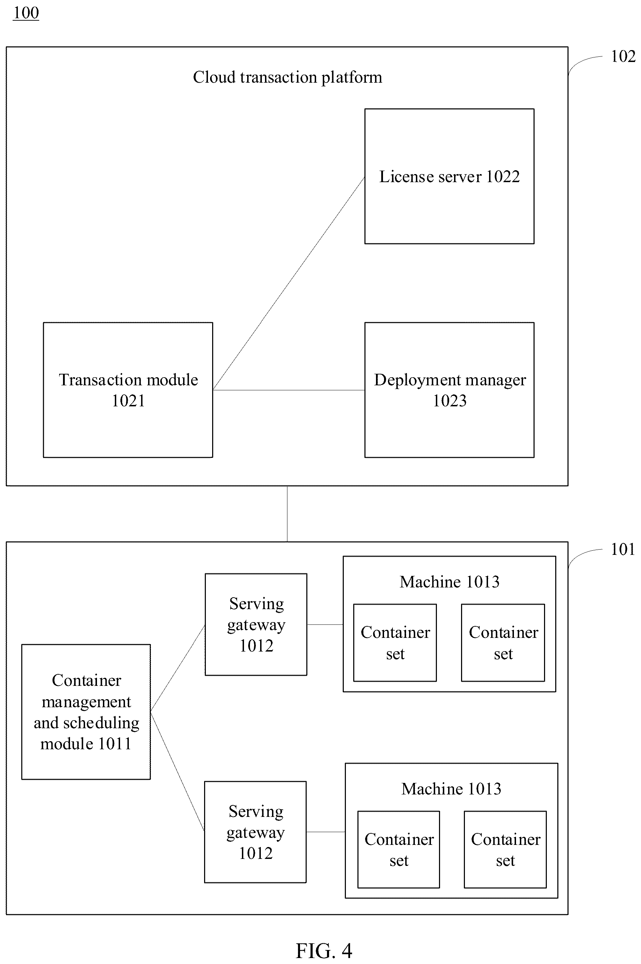

In some embodiments, with reference to FIG. 4, when the software asset on the cloud transaction platform 102 is a software image, that is, the first software module is a software image, the computing instance included in the first computing instance set on the cloud transaction platform 102 is a container. The cloud service platform 101 includes a container management and scheduling module 1011, at least one serving gateway 1012, and at least one machine 1013.

The container management and scheduling module 1011 includes an image repository of the first user.

After completing a transaction for the first software module, the transaction module 1021 may store the first software module in the image repository of the first user.

When the first software module needs to be run, the first user may enter a running request for the first software module into the container management and scheduling module 1011. The container management and scheduling module 1011 provisions the first computing instance set on the at least one machine 1013, communicates with the container in the first computing instance set through some or all serving gateways 1012 in the at least one serving gateway 1012, deploys the first software module in the first computing instance set, and runs the first software module by using the first computing instance set.

In some embodiments, when the software asset on the cloud transaction platform 102 is a software copy, that is, the first software module is a software copy, the cloud service platform 101 is a serverless (Serverless) platform. When the first software module needs to be run, the first user may enter a running request for the first software module into the cloud service platform 101. The cloud service platform 101 downloads the first software module from the cloud transaction platform 102, provisions the first computing instance set on the cloud service platform 101, deploys the first software module in the first computing instance set, and runs the first software module by using the first computing instance set.

Then, a process of running the first software module is described in detail by using any one of the following embodiments.

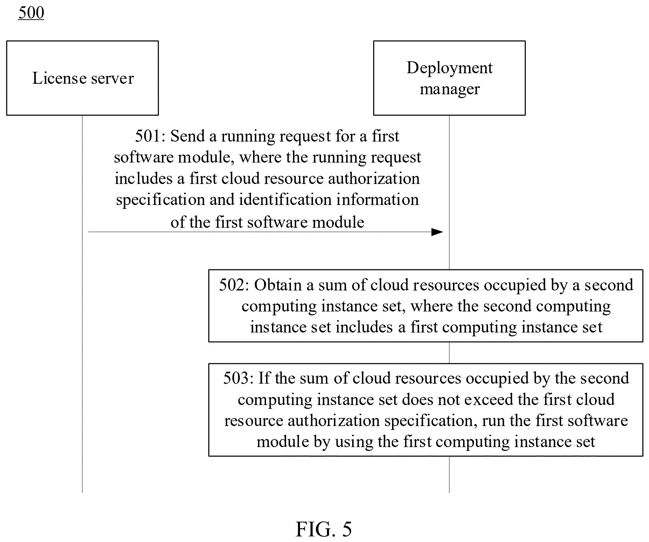

With reference to FIG. 5, an embodiment of this application provides a software module running method 500. The method 500 is applied to the cloud system 100 shown in FIG. 1, FIG. 2, or FIG. 3. In the method 500, a cloud service platform includes a first computing instance set provisioned for a first user, and after authorizing a first cloud resource authorization specification for a first software module, a cloud transaction platform deploys the first software module in a second computing instance set when a sum of cloud resources occupied by the second computing instance set does not exceed the first cloud resource authorization specification. The second computing instance set includes the first computing instance set. Optionally, the second computing instance set may further include a third computing instance set, and the third computing instance set includes at least one computing instance on which the first software module has been run. With reference to FIG. 5, the method 500 includes the following procedure.

Step 501: After authorizing the first cloud resource authorization specification for the first software module associated with the first user, a license server sends a running request for the first software module to a deployment manager, where the running request includes the first cloud resource authorization specification and identification information of the first software module.

The running request is used to request to deploy the first software module in the provisioned first computing instance set for running.

Optionally, the running request may further include a user identifier of the first user and/or identification information of each computing instance in the first computing instance set. Each computing instance in the first computing instance set is a computing instance that is authorized by the license server and that can be used to run the first software module.

The cloud transaction platform includes a transaction module, the license server, and the deployment manager. The first user may purchase the first software module and a cloud resource specification from the transaction module. Therefore, the first software module is associated with the first user. The transaction module generates a transaction order, where the transaction order includes the identification information of the first software module, the user identifier of the first user, and the cloud resource specification, and sends the transaction order to the license server.

The license server receives the transaction order, uses the cloud resource specification as the first cloud resource authorization specification, and authorizes the first cloud resource authorization specification for the first software module. The license server sends the running request for the first software module to the deployment manager, where the running request includes the first cloud resource authorization specification and the identification information of the first software module. Optionally, the running request further includes the user identifier of the first user and/or the identification information of each computing instance in the first computing instance set.

In some embodiments, the cloud service platform includes at least one computing instance, and the at least one computing instance is provisioned by the first user on the cloud service platform in advance. The transaction module on the cloud transaction platform may obtain the identification information of each computing instance in the first computing instance set. The first computing instance set includes the at least one computing instance or some computing instances in the at least one computing instance. The transaction order sent by the transaction module to the license server may further include the identification information of each computing instance in the first computing instance set. The license server may authorize each computing instance in the first computing instance set to run the first software module, and the running request sent to the deployment manager also includes the identification information of each computing instance in the first computing instance set.

Optionally, the cloud service platform stores a second correspondence, and the second correspondence includes the user identifier of the first user and identification information of the at least one computing instance provisioned by the first user. If the first user deploys the first software module for the first time, the cloud service platform does not include the third computing instance set. The third computing instance set includes one or more computing instances on which the first software module associated with the first user has been deployed. If the first user deploys the first software module not for the first time (the second time, the third time, ...), the cloud service platform includes the third computing instance set, and further stores a third correspondence. The third correspondence includes the user identifier of the first user and identification information of each computing instance in the third computing instance set.

When the first user purchases the first software module, the transaction module on the cloud transaction platform obtains, based on the user identifier of the first user, the identification information of the at least one computing instance from the second correspondence stored on the cloud service platform. If the cloud service platform does not include the third computing instance set, the identification information of the at least one computing instance is displayed. If the cloud service platform further includes the third computing instance set, the third computing instance set is obtained, based on the user identifier of the first user, from the third correspondence stored on the cloud service platform, the computing instance in the third computing instance set is removed from the at least one computing instance, and identification information of a remaining computing instance is displayed. In this way, the first user can select the first computing instance set used to run the first software module from the displayed identification information of the computing instance. The transaction module obtains the identification information of each computing instance in the first computing instance set selected by the first user.

Optionally, when the first user purchases the first software module, the transaction module on the cloud transaction platform receives the identification information that is entered by the first user and that is of each computing instance in the first computing instance set used to run the first software module. The first computing instance set is the at least one computing instance or some computing instances in the at least one computing instance, or the first computing instance set is all or some computing instances other than the third computing instance set in the at least one computing instance.

Optionally, if the first user does not select the first computing instance set, the deployment manager may consider, by default, that the first computing instance set used to run the first software module includes the at least one computing instance provisioned by the first user or a computing instance other than the third computing instance set in the at least one computing instance.

In some embodiments, the first cloud resource authorization specification may be a total authorized resource specification, and the first cloud resource authorization specification may include one or more of the following total resource specifications: a total quantity of central processing units (central processing units, CPUs), a total quantity of CPU cores, a total memory size, a total network bandwidth size, a total quantity of network interfaces, a total storage volume size, or the like.

In some embodiments, the first cloud resource authorization specification may be an authorized resource specification of a single computing instance, and the first cloud resource authorization specification may include one or more of the following resource specifications: a quantity of CPUs, a quantity of CPU cores, a memory size, a network bandwidth size, a quantity of network interfaces, a storage volume size, or the like of the single computing instance. In this case, the license server needs to authorize the first computing instance set used to run the first software module, and the running request needs to include the identification information of each computing instance in the first computing instance set.

Step 502: The deployment manager receives the running request, and obtains a sum of cloud resources occupied by the second computing instance set, where the second computing instance set includes the first computing instance set.

In step 502, the sum of cloud resources occupied by the second computing instance set is obtained by performing operations in 5021 and 5022.

5021: Obtain a cloud resource specification occupied by each computing instance in the second computing instance set.

In some embodiments, when the running request includes the identification information of each computing instance in the first computing instance set, the deployment manager queries a resource specification occupied by each computing instance in the first computing instance set from the cloud service platform based on the identification information of each computing instance in the first computing instance set.

If the cloud service platform does not include the third computing instance set, the second computing instance set is the same as the first computing instance set, and the resource specification occupied by each computing instance in the first computing instance set is the resource specification occupied by each computing instance in the second computing instance set.

If the cloud service platform includes the third computing instance set, the identification information of each computing instance in the third computing instance set is obtained, based on the user identifier of the first user, from the third correspondence stored on the cloud service platform, and a resource specification occupied by each computing instance in the third computing instance set is queried from the cloud service platform based on the identification information of each computing instance in the third computing instance set. The resource specification occupied by each computing instance in the second computing instance set includes the resource specification occupied by each computing instance in the first computing instance set and the resource specification occupied by each computing instance in the third computing instance set.

In some embodiments, when the running request does not include the identification information of each computing instance in the first computing instance set, the deployment manager obtains, based on the user identifier of the first user included in the running request, the identification information of the at least one corresponding computing instance from the second correspondence stored on the cloud service platform, where the second computing instance set includes the at least one computing instance, and queries the resource specification occupied by each computing instance in the second computing instance set from the cloud service platform based on identification information of each computing instance in the second computing instance set. In this case, the first computing instance set is the same as the second computing instance set, or the first computing instance set includes a computing instance other than the third computing instance set in the at least one computing instance.

In some embodiments, the deployment manager may receive identification information that is entered by the first user and that is of each computing instance included in the second computing instance set, and query the resource specification occupied by each computing instance in the second computing instance set from the cloud service platform based on the identification information of each computing instance in the second computing instance set.

5022: Obtain, based on the cloud resource specification occupied by each computing instance in the second computing instance set, the sum of cloud resources occupied by the second computing instance set.

In step 5022, resource specifications occupied by all the computing instances in the second computing instance set are accumulated, to obtain the sum of cloud resources occupied by the second computing instance set. Optionally, the sum of cloud resources occupied by the second computing instance set includes one or more of the following: an accumulated value of a quantity of CPUs, an accumulated value of a quantity of CPU cores, an accumulated value of a memory size, an accumulated value of a network bandwidth size, an accumulated value of a quantity of network interfaces, an accumulated value of a storage volume size, or the like.

Alternatively, the sum of cloud resources occupied by the second computing instance set includes the resource specification occupied by each computing instance in the second computing instance set. Optionally, the sum of cloud resources occupied by the second computing instance set includes one or more of the following: a quantity of CPUs, a quantity of CPU cores, a memory size, a network bandwidth size, a quantity of network interfaces, a storage volume size, or the like of each computing instance in the second computing instance set.

Step 503: If the sum of cloud resources occupied by the second computing instance set does not exceed the first cloud resource authorization specification, the deployment manager runs the first software module by using the first computing instance set.

In step 503, if the sum of cloud resources occupied by the second computing instance set does not exceed the first cloud resource authorization specification, the deployment manager obtains the first software module from the cloud transaction platform based on the identification information of the first software module, determines each computing instance included in the first computing instance set on the cloud service platform based on the identification information of each computing instance in the first computing instance set, and deploys the first software module on each computing instance in the first computing instance set. For each computing instance in the first computing instance set, when the first software module in the computing instance is activated by the first user, the first software module is run by using the computing instance. If the sum of cloud resources occupied by the first computing instance set exceeds the first cloud resource authorization specification, the deployment manager rejects deployment of the first software module.

In some embodiments, when the first cloud resource authorization specification is a total authorized resource specification, and the sum of cloud resources occupied by the second computing instance set is obtained by accumulating the resource specifications occupied by all the computing instances in the second computing instance set, the deployment manager determines, when the sum of cloud resources occupied by the second computing instance set is less than or equal to the first cloud resource authorization specification, that the sum of cloud resources occupied by the second computing instance set does not exceed the first cloud resource authorization specification, determines each computing instance included in the first computing instance set on the cloud service platform based on the identification information of each computing instance in the first computing instance set, and deploys the first software module on each computing instance in the first computing instance set.

Optionally, that the sum of cloud resources occupied by the second computing instance set is less than or equal to the first cloud resource authorization specification means that the accumulated value of the quantity of CPUs is less than or equal to the total quantity of CPUs, the accumulated value of the quantity of CPU cores is less than or equal to the total quantity of CPU cores, the accumulated value of the memory size is less than or equal to the total memory size, the accumulated value of the network bandwidth size is less than or equal to the total network bandwidth size, the accumulated value of the quantity of network interfaces is less than or equal to the total quantity of network interfaces, and the accumulated value of the storage volume size is less than or equal to the total storage volume size.

In some embodiments, when the first cloud resource authorization specification is a resource specification of a single computing instance, and the sum of cloud resources occupied by the second computing instance set includes the resource specification occupied by each computing instance in the second computing instance set, the deployment manager determines, when the resource specification occupied by each computing instance in the second computing instance set is less than or equal to the resource specification of the single computing instance, that the sum of cloud resources occupied by the second computing instance set does not exceed the first cloud resource authorization specification, determines each computing instance included in the first computing instance set on the cloud service platform based on the identification information of each computing instance in the first computing instance set, and deploys the first software module on each computing instance in the first computing instance set.

Optionally, that the sum of cloud resources occupied by the second computing instance set is less than or equal to the first cloud resource authorization specification means that the quantity of CPUs of each computing instance in the second computing instance set is less than or equal to the quantity of CPUs of the single computing instance, the quantity of CPU cores of each computing instance in the second computing instance set is less than or equal to the quantity of CPU cores of the single computing instance, the memory size of each computing instance in the second computing instance set is less than or equal to the memory size of the single computing instance, the network bandwidth size of each computing instance in the second computing instance set is less than or equal to the network bandwidth size of the single computing instance, the quantity of network interfaces of each computing instance in the second computing instance set is less than or equal to the quantity of network interfaces of the single computing instance, and the storage volume size of each computing instance in the second computing instance set is less than or equal to the storage volume size of the single computing instance.

In some embodiments, the first user may not provision the first computing instance set on the cloud service platform in advance, and the running request that is for the first software module and that is sent by the license server to the deployment manager is used to request the deployment manager to provision the first computing instance set for the first software module and run the first software module by using the first computing instance set. During implementation, the deployment manager provisions at least one computing instance on the cloud service platform based on the first cloud resource authorization specification, where the first computing instance set includes the at least one computing instance, and deploys the first software module on each computing instance in the first computing instance set.

Optionally, when the first cloud resource authorization specification is a total authorized resource specification, a sum of cloud resources occupied by the at least one computing instance provisioned by the deployment manager on the cloud service platform based on the first cloud resource authorization specification is less than or equal to the first cloud resource specification. That is, for all computing instances in the at least one computing instance, an accumulated value of a quantity of CPUs is less than or equal to the total quantity of CPUs, an accumulated value of a quantity of CPU cores is less than or equal to the total quantity of CPU cores, an accumulated value of a memory size is less than or equal to the total memory size, an accumulated value of a network bandwidth size is less than or equal to the total network bandwidth size, an accumulated value of a quantity of network interfaces is less than or equal to the total quantity of network interfaces, and an accumulated value of a storage volume size is less than or equal to the total storage volume size.

Optionally, when the first cloud resource authorization specification is a resource specification of a single computing instance, the first cloud resource authorization specification further includes a quantity of computing instances. A resource specification occupied by each of the at least one computing instance provisioned by the deployment manager on the cloud service platform based on the first cloud resource authorization specification is less than or equal to the resource specification of the single computing instance, and a quantity of provisioned computing instances is less than or equal to the quantity of computing instances included in the first cloud resource authorization specification. That is, a quantity of CPUs of each of the at least one computing instance is less than or equal to the quantity of CPUs of the single computing instance, a quantity of CPU cores of each of the at least one computing instance is less than or equal to the quantity of CPU cores of the single computing instance, a memory size of each of the at least one computing instance is less than or equal to the memory size of the single computing instance, a network bandwidth size of each of the at least one computing instance is less than or equal to the network bandwidth size of the single computing instance, a quantity of network interfaces of each of the at least one computing instance is less than or equal to the quantity of network interfaces of the single computing instance, and a storage volume size of each of the at least one computing instance is less than or equal to the storage volume size of the single computing instance.

In some embodiments, the computing instance included in the second computing instance set may be one or more of the following computing instances: a virtual machine, a container, a bare metal server, or the like.

In this embodiment of this application, the running request that is for the first software module and that is sent by the license server to the deployment manager includes the first cloud resource authorization specification. In this way, the deployment server obtains the sum of cloud resources occupied by the second computing instance set used to deploy the first software module, and when the sum of cloud resources occupied by the second computing instance set does not exceed the first cloud resource authorization specification, deploys the first software module in the first computing instance set. In this way, expansion of a cloud resource occupied by the first computing instance set used to deploy the first software module can be prevented, to avoid expanding a use range of the first software module, protect interests of a software vendor, and avoid causing an economic loss to the software vendor.

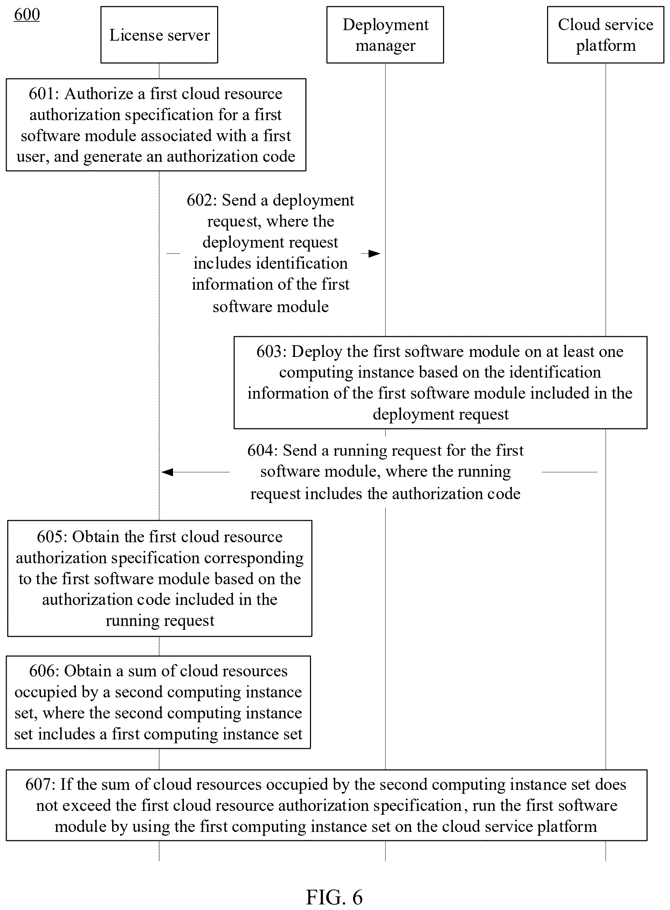

With reference to FIG. 6, an embodiment of this application provides a software module running method 600. The method 600 is applied to the cloud system 100 shown in FIG. 1, FIG. 2, or FIG. 3. In the method 600, a cloud service platform includes a first computing instance set, a first software module has been deployed in the first computing instance set, and after authorizing a first cloud resource authorization specification for the first software module, a cloud transaction platform may run the first software module when a sum of cloud resources occupied by a second computing instance set does not exceed the first cloud resource authorization specification. The second computing instance set includes the first computing instance set. Optionally, the second computing instance set may further include a third computing instance set, and the third computing instance set includes at least one computing instance on which the first software module has been run. With reference to FIG. 6, the method 600 includes the following procedure.

Step 601: A license server authorizes the first cloud resource authorization specification for the first software module associated with a first user, and generates an authorization code.

The cloud transaction platform includes a transaction module, the license server, and a deployment manager. The first user may purchase the first software module and a cloud resource specification from the transaction module. The transaction module generates a transaction order, where the transaction order includes identification information of the first software module and the cloud resource specification, and sends the transaction order to the license server. Optionally, the transaction order further includes a user identifier of the first user.

The license server receives the transaction order, uses the cloud resource specification as the first cloud resource authorization specification, authorizes the first cloud resource authorization specification for the first software module corresponding to the identification information of the first software module, and then generates the authorization code.

In some embodiments, the license server stores a correspondence between the authorization code and the first cloud resource authorization specification in a first correspondence, or stores a correspondence among the authorization code, the identification information of the first software module, and the first cloud resource authorization specification in a first correspondence, or stores a correspondence among the authorization code, the identification information of the first software module, the user identifier of the first user, and the first cloud resource authorization specification in a first correspondence.

In some embodiments, the license server may encrypt the first cloud resource authorization specification by using a private key included in a public-private key pair, to obtain the authorization code.

In some embodiments, the license server may notify the first user of the authorization code. For example, the authorization code may be added to the transaction order, and the first user may obtain the authorization code when viewing the transaction order. Alternatively, an SMS message or an email may be sent to the first user, where the SMS message or the email includes the authorization code.

In some embodiments, the first user may purchase different cloud resource specifications for the first software module. In this way, the license server can authorize, for the first software module, each cloud resource specification purchased by the first user, and generate a different authorization code for each cloud resource specification. Optionally, the license server correspondingly stores the user identifier of the first user and the generated authorization code in a correspondence between the user identifier and the authorization code.

In some embodiments, the first cloud resource authorization specification may be a total authorized resource specification.

Step 602: The license server sends a deployment request to the deployment manager, where the deployment request includes the identification information of the first software module.

In some embodiments, the deployment request further includes the user identifier of the first user and/or identification information of at least one computing instance, and the at least one computing instance is an authorized computing instance that can be used to deploy the first software module.

In some embodiments, the cloud service platform includes m computing instances, where m is an integer greater than or equal to 1, and the m computing instances are provisioned by the first user on the cloud service platform in advance. The transaction module on the cloud transaction platform may obtain the identification information of the at least one computing instance. The at least one computing instance is a computing instance that is configured by the first user and that is used to deploy the first software module, and the at least one computing instance is the m computing instances or some computing instances in the m computing instances. The transaction order sent by the transaction module to the license server may further include the identification information of the at least one computing instance. The license server may authorize the at least one computing instance to deploy the first software module, and the deployment request sent to the deployment manager also includes the identification information of the at least one computing instance.

Optionally, an operation in which the transaction module may obtain the identification information of the at least one computing instance may be as follows:
The cloud service platform stores a second correspondence, and the second correspondence includes the user identifier of the first user and identification information of the m computing instances. When the first user purchases the first software module, the transaction module on the cloud transaction platform obtains, based on the user identifier of the first user, the identification information of the m computing instances from the second correspondence stored on the cloud service platform, and displays the identification information of the m computing instances. In this way, the first user can select the at least one computing instance used to deploy the first software module from the m computing instances corresponding to the identification information of the m computing instances. The transaction module obtains the identification information of the at least one computing instance selected by the first user.

Alternatively, when the first user purchases the first software module, the transaction module on the cloud transaction platform receives the identification information that is entered by the first user and that is of the at least one computing instance used to deploy the first software module. The at least one computing instance is the m computing instances or some computing instances in the m computing instances.

For example, the transaction module may display at least one cloud resource specification shown in Table 1 to the first user. The first user may choose to purchase a cloud resource specification 1, and enter identification information of two computing instances into the transaction module. The identification information of the two computing instances is VM1 and VM2. The transaction module sends a transaction order to the license server. The transaction order includes the identification information of the first software module, the cloud resource specification 1, and the identification information VM1 and VM2 of the two computing instances.

**Table 1**

| Specification | Total quantity of CPUs | Total memory size |
|---|---|---|
| Cloud resource specification 1 | 4 CPUs | 8G |
| Cloud resource specification 2 | 8 CPUs | 16G |
| Cloud resource specification 3 | 10 CPUs | 32G |

The license server receives the transaction order, authorizes the cloud resource specification 1 for the first software module, that is, the cloud resource specification 1 is the first cloud resource authorization specification, and authorizes the two computing instances corresponding to VM1 and VM2 for the first software module. Content authorized by the license server is shown in Table 2, and the deployment request sent to the deployment manager carries content shown in Table 2.

**Table 2**

| Authorization item | Authorization value |
|---|---|
| Identification information of the computing instance | VM1 and VM2 |
| Total quantity of CPUs | 4 |
| Total memory size | 8G |
| Total quantity of network interfaces | Undefined |
| Total storage volume size | Undefined |
| Total quantity of CPU cores | Undefined |

Step 603: The deployment manager receives the deployment request, and deploys the first software module on the at least one computing instance based on the identification information of the first software module included in the deployment request.

In some embodiments, the first software module may be deployed on the at least one computing instance on the cloud service platform in the following several manners.

Manner 1: The deployment request includes the identification information of the at least one authorized computing instance, and the deployment manager determines the at least one computing instance on the cloud service platform based on the identification information of the at least one computing instance, obtains the first software module from the cloud transaction platform based on the identification information of the first software module, and deploys the first software module on each of the at least one computing instance.

Manner 2: The deployment request includes the identification information of the at least one authorized computing instance, and the deployment manager receives identification information of n computing instances that are configured by the first user and that are used to deploy the first software module, where n is an integer greater than or equal to 1, and the n computing instances are computing instances provisioned by the first user on the cloud service platform, obtains identification information of one or more authorized computing instances used to deploy the first software module from the identification information of the n computing instances based on the identification information of the at least one authorized computing instance, determines the one or more computing instances on the cloud service platform based on the identification information of the one or more computing instances, obtains the first software module based on the identification information of the first software module, and deploys the first software module on the one or more computing instances.

Manner 3: The deployment manager receives identification information of n computing instances that are configured by the first user and that are used to deploy the first software module, where n is an integer greater than or equal to 1, and the n computing instances are computing instances provisioned by the first user on the cloud service platform, determines the n computing instances on the cloud service platform based on the identification information of the n computing instances, obtains the first software module based on the identification information of the first software module, and deploys the first software module on each of the n computing instances.

Manner 4: The deployment request includes the user identifier of the first user, and the deployment manager obtains, based on the user identifier of the first user, the identification information of the m computing instances from the second correspondence stored on the cloud service platform, and displays the identification information of the m computing instances. In this way, the first user can select the at least one computing instance used to deploy the first software module from the m computing instances corresponding to the identification information of the m computing instances. The first software module is obtained based on the identification information of the first software module, and the first software module is deployed on each of the at least one computing instance. Alternatively, after obtaining the identification information of the m computing instances, the deployment manager determines the m computing instances on the cloud service platform based on the identification information of the m computing instances, obtains the first software module based on the identification information of the first software module, and deploys the first software module on each of the m computing instances.

Step 604: When the first user activates the first software module deployed in the first computing instance set, the cloud service platform sends a running request for the first software module to the license server, where the running request includes the authorization code.

The first computing instance set includes the at least one computing instance or some computing instances in the at least one computing instance. If the first user activates the first software module on the at least one computing instance at a time, the first computing instance set includes the at least one computing instance. If the first user activates the first software module on the at least one computing instance for a plurality of times, each time the first user activates the first software module on some computing instances in the at least one computing instance, the first computing instance set includes the some computing instances.

In some embodiments, when the first user activates the first software module in the first computing instance set on the cloud service platform, the first user further enters the authorization code into the cloud service platform. The cloud service platform receives the authorization code, and sends a running request for the first software module to the license server, where the running request includes the authorization code.

In some embodiments, when the first user activates the first software module in the first computing instance set, the cloud service platform obtains at least one authorization code corresponding to the first user, to enable the first user to select an authorization code, and sends a running request including the selected authorization code to the license server.

Optionally, during implementation, the cloud service platform sends an obtaining request to the license server, where the obtaining request includes the user identifier of the first user. The license server receives the obtaining request, obtains at least one corresponding authorization code from the correspondence between the user identifier and the authorization code based on the user identifier of the first user included in the obtaining request, and sends the at least one authorization code to the cloud service platform. The cloud service platform receives the at least one authorization code, displays the at least one authorization code, to enable the first user to select an authorization code, obtains the authorization code selected by the first user, and sends a running request for the first software module to the license server, where the running request includes the authorization code.

In some embodiments, the running request may further include a resource specification occupied by each computing instance in the first computing instance set and/or identification information of each computing instance in the first computing instance set. Optionally, the running request further includes the identification information of the first software module and/or the user identifier of the first user.

Step 605: The license server receives the running request, and obtains the first cloud resource authorization specification corresponding to the first software module based on the authorization code included in the running request.

In step 605, the license server receives the running request, and obtains the corresponding first cloud resource authorization specification from the first correspondence based on the authorization code included in the running request. Alternatively, the corresponding first cloud resource authorization specification is obtained from the first correspondence based on the authorization code and the identification information of the first software module that are included in the running request. Alternatively, the corresponding first cloud resource authorization specification is obtained from the first correspondence based on the authorization code, the identification information of the first software module, and the user identifier of the first user that are included in the running request. Alternatively, the authorization code is decrypted by using a public key included in the public-private key pair, to obtain the first cloud resource authorization specification.

Step 606: The license server obtains the sum of cloud resources occupied by the second computing instance set, where the second computing instance set includes the first computing instance set.

If the first user activates the first software module on the at least one computing instance at a time, the second computing instance set is the same as the first computing instance set, and the license server obtains the resource specification of each computing instance in the first computing instance set, obtains, based on the resource specification of each computing instance in the first computing instance set, a sum of cloud resources occupied by the first computing instance set, and uses the sum of cloud resources occupied by the first computing instance set as the sum of cloud resources occupied by the second computing instance set.

If the first user activates the first software module on the at least one computing instance for a plurality of times, when the first user activates the first software module for the first time, the second computing instance set is the same as the first computing instance set, and the license server obtains the resource specification of each computing instance in the first computing instance set, obtains, based on the resource specification of each computing instance in the first computing instance set, a sum of cloud resources occupied by the first computing instance set, and uses the sum of cloud resources occupied by the first computing instance set as the sum of cloud resources occupied by the second computing instance set.

When the first user activates the first software module not for the first time, the first computing instance set is a subset of the second computing instance set, the second computing instance set further includes the third computing instance set, and the third computing instance set includes a computing instance on which the first software module has been run. The cloud service platform stores a third correspondence, and the third correspondence includes the user identifier of the first user, the identification information of the first software module, and identification information of each computing instance in the third computing instance set.

The running request includes the user identifier of the first user and the identification information of the first software module. The license server obtains, based on the user identifier of the first user and the identification information of the first software module, the identification information of each computing instance in the third computing instance set from the third correspondence on the cloud service platform, and obtains a resource specification of each computing instance in the third computing instance set from the cloud service platform based on the identification information of each computing instance in the third computing instance set. The license server further obtains the resource specification of each computing instance in the first computing instance set, and obtains, based on the resource specification of each computing instance in the first computing instance set and the resource specification of each computing instance in the third computing instance set, the sum of cloud resources occupied by the second computing instance set.

In some embodiments, a detailed implementation process in which the license server obtains the resource specification of each computing instance in the first computing instance set may be as follows: When the running request includes the resource specification of each computing instance in the first computing instance set, the resource specification of each computing instance in the first computing instance set is obtained from the running request. When the running request includes the identification information of each computing instance in the first computing instance set, the resource specification of each computing instance in the first computing instance set is queried from the cloud service platform based on the identification information of each computing instance in the first computing instance set.

Step 607: If the sum of cloud resources occupied by the second computing instance set does not exceed the first cloud resource authorization specification, the license server runs the first software module by using the first computing instance set on the cloud service platform.

In step 607, when determining that the sum of cloud resources occupied by the second computing instance set does not exceed the first cloud resource authorization specification, the license server sends an agreement indication to the cloud service platform. The cloud service platform receives the agreement indication, and the first software module is run by using the first computing instance set.

When determining that the sum of cloud resources occupied by the second computing instance set exceeds the first cloud resource authorization specification, the license server sends a rejection indication to the cloud service platform. The cloud service platform receives the rejection indication, and running of the first software module by using the first computing instance set is rejected.

In some embodiments, when determining that the sum of cloud resources occupied by the second computing instance set does not exceed the first cloud resource authorization specification, the license server further correspondingly stores the user identifier of the first user, the identification information of the first software module, and the identification information of each computing instance in the first computing instance set in the third correspondence on the cloud service platform.

In this embodiment of this application, after authorizing the first cloud resource authorization specification for the first software module, the license server generates the authorization code. The authorization code is associated with the first cloud resource authorization specification. When the first user activates the first software module deployed in the first computing instance set, the cloud service platform obtains the authorization code, and sends the running request for the first software module to the license server. The license server obtains the first cloud resource authorization specification based on the authorization code, and obtains the sum of cloud resources occupied by the second computing instance set. The second computing instance set includes the first computing instance set and the third computing instance set in which the first software module has been activated and run. When the sum of cloud resources occupied by the second computing instance set does not exceed the first cloud resource authorization specification, the first software module is run by using the first computing instance set. In this way, expansion of a cloud resource occupied by the second computing instance set used to run the first software module can be prevented, to avoid expanding a use range of the first software module, protect interests of a software vendor, and avoid causing an economic loss to the software vendor.

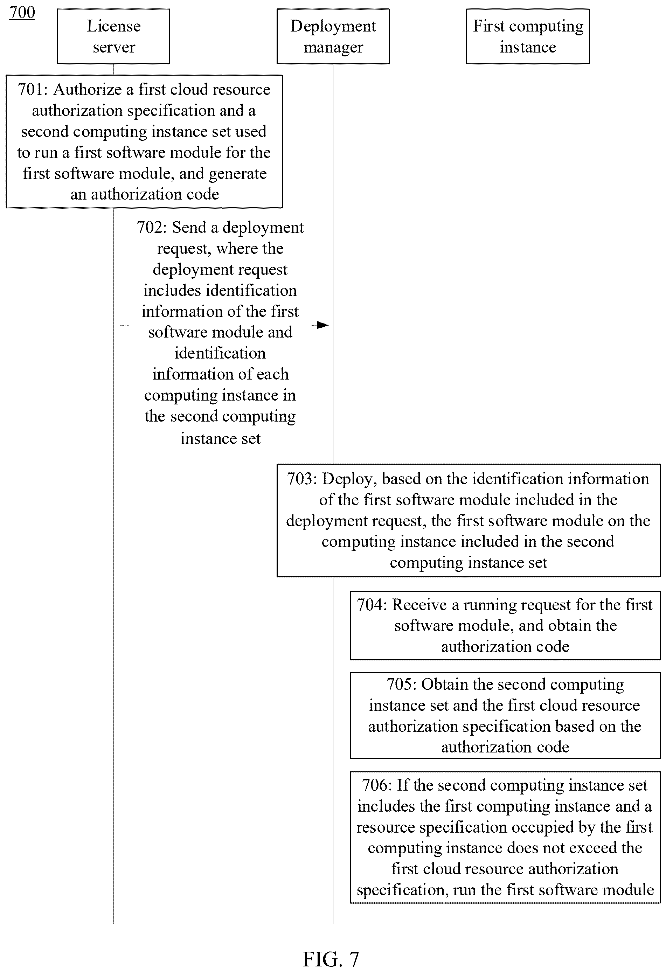

With reference to FIG. 7, an embodiment of this application provides a software module running method 700. The method 700 is applied to the cloud system 100 shown in FIG. 1, FIG. 2, or FIG. 3. In the method 700, a cloud service platform includes a second computing instance set, a first software module has been deployed in the second computing instance set, a cloud transaction platform authorizes a first cloud resource authorization specification for the first software module and authorizes the second computing instance set to run the first software module, and the first cloud resource authorization specification is a resource specification occupied by a single computing instance. When the first software module on a first computing instance is activated, and when the second computing instance set includes the first computing instance and a resource specification occupied by the first computing instance does not exceed the first cloud resource authorization specification, the first software module may be run by using the first computing instance. With reference to FIG. 7, the method 700 includes the following procedure.

Step 701: A license server authorizes the first cloud resource authorization specification and the second computing instance set used to run the first software module for the first software module, and generates an authorization code.

The cloud transaction platform includes a transaction module, the license server, and a deployment manager. A first user may purchase, from the transaction module, the first software module, a cloud resource specification, and the second computing instance set used to deploy the first software module. The transaction module generates a transaction order, where the transaction order includes identification information of the first software module, the cloud resource specification, and identification information of each computing instance in the second computing instance set, and sends the transaction order to the license server.

The license server receives the transaction order, uses the cloud resource specification as the first cloud resource authorization specification, authorizes the first cloud resource authorization specification and each computing instance in the second computing instance set for the first software module corresponding to the identification information of the first software module, and then generates the authorization code.

In some embodiments, the license server stores, in a first correspondence, a correspondence among the authorization code, the first cloud resource authorization specification, and the identification information of each computing instance in the second computing instance set.

In some embodiments, the license server may encrypt the first cloud resource authorization specification and the identification information of each computing instance in the second computing instance set by using a private key included in a public-private key pair, to obtain the authorization code, and notify the first user of the authorization code.

For example, the authorization code may be added to the transaction order, and the first user may obtain the authorization code when viewing the transaction order. Alternatively, an SMS message or an email may be sent to the first user, where the SMS message or the email includes the authorization code.

In some embodiments, the first cloud resource authorization specification may be an authorized resource specification occupied by a single computing instance.

In some embodiments, the cloud service platform includes m computing instances, where m is an integer greater than or equal to 1, and the m computing instances are provisioned by the first user on the cloud service platform in advance. The transaction module on the cloud transaction platform may obtain the second computing instance set. The second computing instance set includes the m computing instances or some computing instances in the m computing instances.

Optionally, the cloud service platform stores a correspondence between a user identifier of the first user and identification information of the m computing instances. When the first user purchases the first software module, the transaction module on the cloud transaction platform obtains, based on the user identifier of the first user, the identification information of the m computing instances from the correspondence that is between the user identifier and the identification information of the computing instance and that is stored on the cloud service platform, and displays the identification information of the m computing instances. In this way, the first user can select at least one computing instance used to run the first software module from the m computing instances corresponding to the identification information of the m computing instances, to form the second computing instance set. The transaction module obtains the second computing instance set.

Optionally, when the first user purchases the first software module, the transaction module on the cloud transaction platform receives the identification information that is entered by the first user and that is of each computing instance in the second computing instance set used to run the first software module.

For example, the transaction module may display at least one cloud resource specification shown in Table 3 to the first user. Each displayed cloud resource specification is a cloud resource specification occupied by a single computing instance. The first user may choose to purchase a cloud resource specification 4, and enter identification information of two computing instances included in the second computing instance set into the transaction module. The identification information of the two computing instances is VM1 and VM2. The transaction module sends a transaction order to the license server. The transaction order includes the identification information of the first software module, the cloud resource specification 4, and the identification information VM1 and VM2 of the two computing instances.

**Table 3**

| Specification | Quantity of CPUs of the single computing instance | Memory size of the single computing instance |
|---|---|---|
| Cloud resource specification 4 | 1 CPU | 2G |
| Cloud resource specification 5 | 2 CPUs | 4G |
| Cloud resource specification 6 | 3 CPUs | 6G |

The license server receives the transaction order, authorizes the cloud resource specification 4 for the first software module, that is, the cloud resource specification 4 is the first cloud resource authorization specification, and authorizes the two computing instances corresponding to VM1 and VM2 for the first software module. Content authorized by the license server is shown in Table 4. The cloud resource specification 4, VM1, and VM2 are encrypted by using the private key included in the public-private key pair, to obtain the authorization code, and the first user is notified of the authorization code.

**Table 4**

| Authorization item | Authorization value |
|---|---|
| Identification information of the computing instance | VM1 and VM2 |
| Quantity of CPUs of the single computing instance | 1 |
| Memory size of the single computing instance | 2G |
| Quantity of network interfaces of the single computing instance | Undefined |
| Storage volume size of the single computing instance | Undefined |
| Quantity of CPU cores of the single computing instance | Undefined |

Step 702: The license server sends a deployment request to the deployment manager, where the deployment request includes the identification information of the first software module and the identification information of each computing instance in the second computing instance set.

Step 703: The deployment manager receives the deployment request, and deploys, based on the identification information of the first software module included in the deployment request, the first software module on the computing instance included in the second computing instance set.

In step 703, the deployment request includes the identification information of the first software module and the identification information of each computing instance in the second computing instance set, and the deployment manager determines each computing instance in the second computing instance set on the cloud service platform based on the identification information of each computing instance in the second computing instance set, obtains the first software module from the cloud service platform based on the identification information of the first software module, and deploys the first software module on each computing instance in the second computing instance set.

For any computing instance in the second computing instance set, for ease of description, the computing instance is referred to as a first computing instance. The first user may activate the first software module on the first computing instance, and then run the first software module by using the first computing instance based on the following procedure.

Step 704: The first computing instance receives a running request for the first software module, and obtains the authorization code.

In step 704, the first user triggers the running request for the first software module to the first computing instance by activating the first software module on the first computing instance. When the first user activates the first software module on the first computing instance, the first user further enters the authorization code into the first software module, and the first computing instance receives the authorization code.

Step 705: The first computing instance obtains the second computing instance set and the first cloud resource authorization specification based on the authorization code.

In step 705, the first computing instance obtains the corresponding first cloud resource authorization specification and the identification information of each computing instance in the second computing instance set from the first correspondence in the license server based on the authorization code. Alternatively, the authorization code is decrypted by using a public key included in the public-private key pair, to obtain the first cloud resource authorization specification and the identification information of each computing instance in the second computing instance set.

Step 706: If the second computing instance set includes the first computing instance and a resource specification occupied by the first computing instance does not exceed the first cloud resource authorization specification, the first computing instance runs the first software module.

In step 706, the first computing instance obtains the resource specification occupied by the first computing instance from the cloud service platform, determines, when the identification information of each computing instance in the second computing instance set includes identification information of the first computing instance, that the second computing instance set includes the first computing instance, and when the resource specification occupied by the first computing instance does not exceed the first cloud resource authorization specification, runs the first software module.

In this embodiment of this application, after authorizing the first cloud resource authorization specification and the second computing instance set for the first software module, the license server generates the authorization code. The authorization code is associated with the first cloud resource authorization specification and the second computing instance set. When the first user activates the first software module on the first computing instance, the first computing instance obtains the authorization code, obtains the first cloud resource authorization specification and the second computing instance set based on the authorization code, and when the second computing instance set includes the first computing instance and the resource specification occupied by the first computing instance does not exceed the first cloud resource authorization specification, runs the first software module. In this way, expansion of a cloud resource occupied by the second computing instance set used to run the first software module can be prevented, to avoid expanding a use range of the first software module, protect interests of a software vendor, and avoid causing an economic loss to the software vendor.

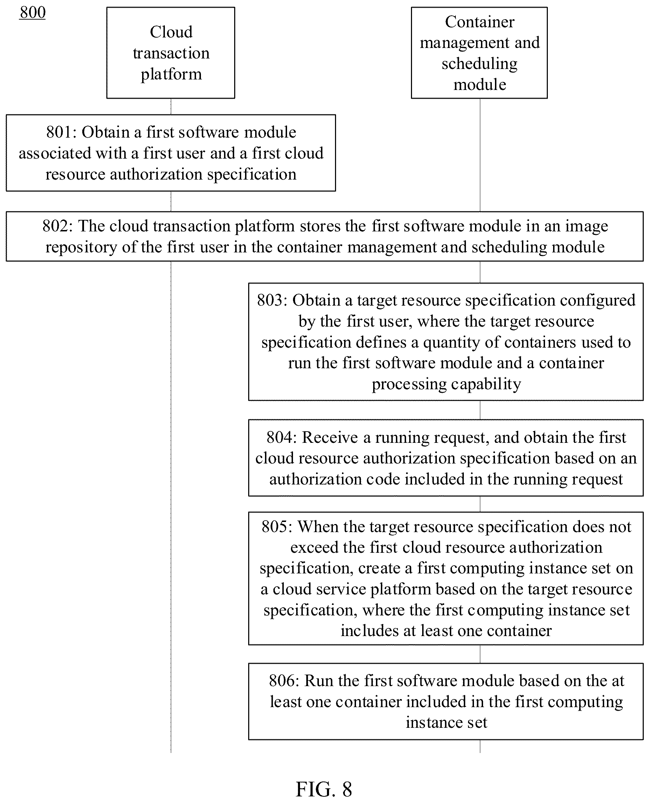

With reference to FIG. 8, an embodiment of this application provides a software module running method 800. The method 800 is applied to the cloud system 100 shown in FIG. 1, FIG. 2, FIG. 3, or FIG. 4. In the method 800, a cloud transaction platform authorizes a first cloud resource authorization specification for a first software module, the first software module may be a software image, and a cloud service platform creates, based on the first cloud resource authorization specification, a first computing instance set used to run the first software module. With reference to FIG. 8, the method 800 includes the following procedure.

Step 801: The cloud transaction platform obtains the first software module associated with a first user and the first cloud resource authorization specification.

The first software module associated with the first user is a software module purchased by the first user.

In some embodiments, the first cloud resource authorization specification defines a quantity of authorized containers that can be used to run the first software module and a container processing capability.

A software vendor platform uploads a software image to be transacted to the cloud transaction platform. In this way, the first user can purchase the software image on the cloud transaction platform, that is, purchase the first software module. Identification information of the first software module is identification information of the software image.

In some embodiments, the software vendor platform may further upload at least one cloud resource specification corresponding to the first software module to the cloud transaction platform. Each cloud resource specification defines a quantity of containers that can be used to run the first software module and a container processing capability.

Optionally, for each of the at least one cloud resource specification, the cloud resource specification includes a quantity of containers and a resource specification occupied by a single container. The resource specification occupied by the single container may include one or more of the following information: a quantity of CPUs, a quantity of graphics processing units (graphics processing units, GPUs), a quantity of embedded neural-network processing units (neural-network processing units, NPUs), a memory size, or the like. The cloud resource specification is used to limit a processing capability of the container.

Optionally, the cloud resource specification further includes one or more of the following information: a quantity of serving gateways, a set quantity of container sets, a quantity of machines, a validity period, a maximum quantity of users who can be processed, or the like. It is assumed that w is used to represent the quantity of serving gateways, x is used to represent the quantity of containers, y is used to represent the quantity of sets, and z is used to represent the quantity of machines, where w, x, y, and z are all integers greater than 0. That is, the cloud resource specification information defines w serving gateways and y container sets, the y container sets include a total of x containers, the y container sets may be deployed on z machines, containers in one or more container sets may be deployed on each machine, and the x containers communicate with the w serving gateways.

When the first user purchases the first software module, the cloud transaction platform displays the at least one cloud resource specification corresponding to the first software module, and the first user purchases a cloud resource specification from the at least one cloud resource specification. The cloud transaction platform authorizes, for the first software module, the cloud resource specification purchased by the first user. The first cloud resource authorization specification includes the cloud resource specification.

Optionally, when the first user purchases the first cloud resource authorization specification, a device identifier of at least one machine used to run the first software module may be further configured. The first cloud resource authorization specification may further include the device identifier of the at least one machine. The at least one machine may include a bare metal server, a physical machine, a virtual machine, and/or the like.

In some embodiments, the cloud transaction platform may further generate an authorization code, and store a correspondence between the authorization code and the first cloud resource authorization specification in a first correspondence. Optionally, the cloud transaction platform may store a correspondence among the authorization code, the identification information of the first software module, and the first cloud resource authorization specification in a first correspondence. Alternatively, the cloud transaction platform may further encrypt the first cloud resource authorization specification by using a private key, to obtain the authorization code.

In some embodiments, the cloud transaction platform includes a transaction module and a license server. The first user may purchase the first software module and a cloud resource specification from the transaction module. A transaction order is generated, where the transaction order includes the identification information of the first software module and the cloud resource specification, and the transaction order is sent to the license server. The license server receives the transaction order, uses the cloud resource specification as the first cloud resource authorization specification, authorizes the first cloud resource authorization specification for the first software module, generates an authorization code, and stores a correspondence between the authorization code and the first cloud resource authorization specification in a first correspondence, or stores a correspondence among the authorization code, the identification information of the first software module, and the first cloud resource authorization specification in a first correspondence. Alternatively, the license server encrypts the first cloud resource authorization specification by using a private key, to obtain the authorization code.

In some embodiments, the cloud transaction platform (the license server) may not generate the authorization code, but the software vendor platform generates the authorization code. During implementation, after generating a transaction order, the transaction module further sends the transaction order to the software vendor platform. After receiving the transaction order, the software vendor platform generates the authorization code, and stores a correspondence between the authorization code and the first cloud resource authorization specification in a first correspondence, or stores a correspondence among the authorization code, the identification information of the first software module, and the first cloud resource authorization specification in a first correspondence, or stores a correspondence among the authorization code, a user identifier of the first user, the identification information of the first software module, and the first cloud resource authorization specification in a first correspondence.

The following uses an example for description. With reference to Table 5, the cloud transaction platform includes three cloud resource specifications corresponding to the first software module, and the three cloud resource specifications are uploaded by a software vendor to the cloud transaction platform and stored on the cloud transaction platform.

**Table 5**

| | Quantity of containers | Resource specification | Quantity of sets | Quantity of machines |
|---|---|---|---|---|
| Cloud resource specification 1 | 4 | 4 CPUs and 8G memory | 2 | 2 |
| Cloud resource specification 2 | 8 | 6 CPUs and 16G memory | 4 | 4 |
| Cloud resource specification 3 | 16 | 10 CPUs and 32G memory | 8 | 6 |

The cloud transaction platform may display the three cloud resource specifications shown in Table 5. The first user may choose to purchase the cloud resource specification 1, and configure device identifiers ID1 and ID2 of two machines used to run the first software module. In this way, the cloud transaction platform authorizes the cloud resource specification 1 for the first software module, and obtains the first cloud resource authorization specification. The first cloud resource authorization specification includes the device identifiers ID1 and ID2, and the cloud resource specification 1, as shown in Table 6.

**Table 6**

| Authorization item | Authorization value |
|---|---|
| Validity period | December 31, 2025 |
| Device identifier | ID1 and ID2 |
| Quantity of sets | 2 |
| Quantity of containers | 4 |
| Quantity of CPUs of the single container | 4 |
| Memory size of the single container | 8G |

In some embodiments, the first user may configure the first cloud resource authorization specification on the cloud transaction platform, the cloud transaction platform calculates a price of the first cloud resource authorization specification, and the first user completes a transaction for the first cloud resource authorization specification based on the price. Then, the cloud transaction platform generates an authorization code, and stores a correspondence between the authorization code and the first cloud resource authorization specification in a first correspondence, or stores a correspondence among the authorization code, the identification information of the first software module, and the first cloud resource authorization specification in a first correspondence. Alternatively, the cloud transaction platform may further encrypt the first cloud resource authorization specification by using a private key, to obtain the authorization code.

Step 802: The cloud transaction platform stores the first software module in an image repository corresponding to the first user in a container management and scheduling module.

The cloud service platform includes the container management and scheduling module, the container management and scheduling module includes the image repository corresponding to the first user, and the image repository is associated with the user identifier of the first user. The cloud transaction platform obtains the user identifier of the first user, and stores the first software module in the image repository corresponding to the first user in the container management and scheduling module based on the user identifier of the first user, so that the image repository corresponding to the first user stores the first software module.

After generating the authorization code, the cloud transaction platform may notify the first user of the authorization code. For example, the cloud transaction platform may send the authorization code to a terminal device corresponding to the first user, or display the authorization code to the first user.

Step 803: The container management and scheduling module obtains a target resource specification configured by the first user, where the target resource specification defines a quantity of containers used to run the first software module and a container processing capability.

The container management and scheduling module allows the first user to configure the target resource specification used to run the software image. Optionally, the container management and scheduling module displays a configuration interface, the first user may configure the target resource specification in the configuration interface, and the container management and scheduling module obtains the target resource specification from the configuration interface.

After obtaining the target resource specification, the container management and scheduling module may store the target resource specification. Optionally, the container management and scheduling module obtains the user identifier of the first user, and stores a correspondence between the user identifier of the first user and the target resource specification.

When the first user needs to start and run the first software module, the first user may enter a running request for the first software module into the container management and scheduling module, where the running request includes the authorization code and the identification information of the first software module, to start and run the first software module.

Step 804: The container management and scheduling module receives the running request, and obtains the first cloud resource authorization specification based on the authorization code included in the running request.

In some embodiments, the container management and scheduling module obtains, based on the authorization code, the corresponding first cloud resource authorization specification from the first correspondence stored on the cloud transaction platform or the software vendor platform. Alternatively, the container management and scheduling module obtains, based on the authorization code and the identification information of the first software module, the corresponding first cloud resource authorization specification from the first correspondence stored on the cloud transaction platform or the software vendor platform. Alternatively, the container management and scheduling module obtains, based on the authorization code, the user identifier of the first user, and the identification information of the first software module, the corresponding first cloud resource authorization specification from the first correspondence stored on the cloud transaction platform or the software vendor platform.

In some embodiments, the container management and scheduling module decrypts the authorization code by using a public key that is included in a public-private key pair and that corresponds to the private key, to obtain the first cloud resource authorization specification.

In some embodiments, the cloud transaction platform may generate a public-private key pair in advance, where the public-private key pair includes the private key and the public key, and send the public key to the container management and scheduling module. The container management and scheduling module receives and stores the public key.

Step 805: When the target resource specification does not exceed the first cloud resource authorization specification, the container management and scheduling module creates a first computing instance set on the cloud service platform based on the target resource specification, where the first computing instance set includes at least one container.

In step 805, the container management and scheduling module may obtain the corresponding target resource specification from the stored correspondence between the user identifier and the target resource specification based on the user identifier of the first user, compare the first cloud resource authorization specification with the target resource specification, and when the target resource specification does not exceed the first cloud resource authorization specification, create at least one container on the cloud service platform based on the target resource specification.

In some embodiments, the container management and scheduling module may further create at least one serving gateway on the cloud service platform, and the container management and scheduling module may communicate with the at least one container through the at least one serving gateway. In this way, the container management and scheduling module can manage the at least one container through the at least one serving gateway. A quantity of the at least one serving gateway does not exceed a quantity of serving gateways in the first cloud resource authorization specification.

The at least one created container may belong to at least one container set, and each container set includes one or more containers. The at least one container set is deployed on one or more machines on the cloud service platform. For each of the one or more machines, the machine is used to run a container in the one or more container sets. That is, a quantity of the at least one container set does not exceed a quantity of container sets in the first cloud resource authorization specification, a quantity of machines on which the at least one container is located does not exceed a quantity of machines in the first cloud resource authorization specification, or a quantity of namespaces to which the at least one container set belongs does not exceed a quantity of namespaces in the first cloud resource authorization specification.

In some embodiments, in step 805, when a sum of cloud resources occupied by a second computing instance set does not exceed the first cloud resource authorization specification, the container management and scheduling module may alternatively create a first computing instance set on the cloud service platform based on the target resource specification, where the first computing instance set includes at least one container.

The second computing instance set includes the first computing instance set. Optionally, the second computing instance set may further include a third computing instance set, and the third computing instance set includes a container on which the first software module related to the first user has been run.

If the first user triggers, for the first time, the container management and scheduling module to create a container for the first software module, the first computing instance set is the same as the second computing instance set, and the sum of cloud resources occupied by the second computing instance set is equal to the target resource specification.

If the first user has previously triggered the container management and scheduling module to create a container for the first software module, that is, the cloud service platform includes a container used to run the first software module related to the first user, the container management and scheduling module further stores a third correspondence. The third correspondence includes the user identifier of the first user, the identification information of the first software module, and the third computing instance set, and the third computing instance set includes a container on which the first software module related to the first user has been run. In this way, the container management and scheduling module obtains the third computing instance set from the third correspondence based on the user identifier of the first user and the identification information of the first software module; and obtains a resource specification occupied by each container in the third computing instance set from the cloud service platform, and accumulates the resource specification occupied by each container in the third computing instance set and the target resource specification, to obtain the sum of cloud resources occupied by the second computing instance set.

Step 806: The container management and scheduling module runs the first software module based on the at least one container included in the first computing instance set.

In some embodiments, the first user may not need to enter the target resource specification. In this way, when obtaining the first cloud resource authorization specification, the container management and scheduling module creates at least one container on the cloud service platform based on the first cloud resource authorization specification.

In this embodiment of this application, the cloud service platform obtains the first cloud resource authorization specification based on the authorization code corresponding to the first software module, creates at least one container on the cloud service platform based on the first cloud resource authorization specification, and runs the first software module by using the at least one container. The at least one container is created on the cloud service platform based on the first cloud resource authorization specification, so that a sum of cloud resources occupied by the at least one container does not exceed the first cloud resource authorization specification. In this way, expansion of a cloud resource occupied by the at least one container used to deploy the first software module can be prevented, to avoid expanding a use range of the first software module, protect interests of a software vendor, and avoid causing an economic loss to the software vendor.

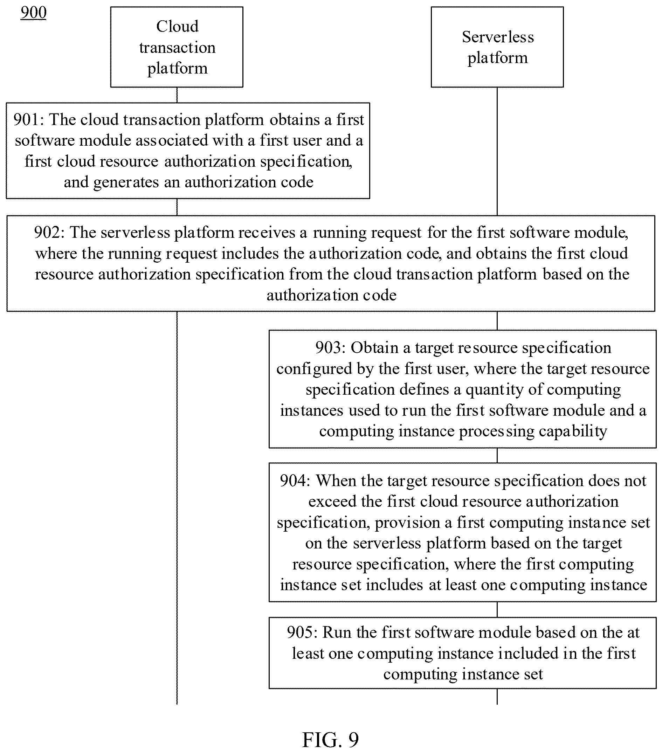

With reference to FIG. 9, an embodiment of this application provides a software module running method 900. The method 900 is applied to the cloud system 100 shown in FIG. 1, FIG. 2, or FIG. 3. In the method 900, a cloud transaction platform authorizes a first cloud resource authorization specification for a first software module, the first software module may be a software copy, and a serverless platform creates, based on the first cloud resource authorization specification, a first computing instance set used to run the first software module. With reference to FIG. 9, the method 900 includes the following procedure.

Step 901: The cloud transaction platform obtains the first software module associated with a first user and the first cloud resource authorization specification, and generates an authorization code.

The first software module associated with the first user is a software module purchased by the first user.

In some embodiments, the first cloud resource authorization specification defines a quantity of authorized computing instances that can be used to run the first software module and a computing instance processing capability.

A software vendor platform uploads a software copy to be transacted to the cloud transaction platform. In this way, the first user can purchase the software copy on the cloud transaction platform, that is, purchase the first software module.

In some embodiments, the software vendor platform may further upload at least one cloud resource specification corresponding to the first software module to the cloud transaction platform. Each cloud resource specification defines a quantity of computing instances that can be used to run the first software module and a computing instance processing capability.

Optionally, for each of the at least one cloud resource specification, the cloud resource specification includes a quantity of computing instances and a resource specification occupied by a single computing instance. The resource specification occupied by the single computing instance may include one or more of the following information: a quantity of CPUs, a quantity of GPUs, a quantity of NPUs, a memory size, or the like. The cloud resource specification is used to limit a processing capability of the computing instance.

Optionally, the cloud resource specification further includes one or more of the following information: a quantity of computing instances, a validity period, a running range, or the like. Optionally, the running range includes one or more of the following: total running duration of the first software module, a total quantity of invocations of the first software module, or a total concurrency quantity of the first software module.

When the first user purchases the first software module, the cloud transaction platform correspondingly stores a user identifier of the first user and a download address of the first software module in a correspondence between a user identifier and a download address. In addition, when the first user purchases the first software module, the cloud transaction platform displays the at least one cloud resource specification corresponding to the first software module, and the first user purchases a cloud resource specification from the at least one cloud resource specification. The cloud transaction platform authorizes, for the first software module, the cloud resource specification purchased by the first user. The first cloud resource authorization specification includes the cloud resource specification.

In some embodiments, the cloud transaction platform may further generate an authorization code, and notify the user of the authorization code.

In some embodiments, the cloud transaction platform stores a correspondence between the authorization code and the first cloud resource authorization specification in a first correspondence. Alternatively, the cloud transaction platform allocates identification information to the first software module, and stores a correspondence among the authorization code, the identification information of the first software module, and the first cloud resource authorization specification in a first correspondence. Optionally, the first software module is a software copy, and the identification information of the first software module may be a copy identifier or the like of the software copy.

In some embodiments, the cloud transaction platform includes a transaction module and a license server. The first user may purchase the first software module and a cloud resource specification from the transaction module. A transaction order is generated, where the transaction order includes the cloud resource specification, and the transaction order is sent to the license server. The license server receives the transaction order, uses the cloud resource specification as the first cloud resource authorization specification, authorizes the first cloud resource authorization specification for the first software module, generates an authorization code, and notifies the user of the authorization code.

The license server stores a correspondence between the authorization code and the first cloud resource authorization specification in a first correspondence. Alternatively, the license server may further allocate identification information of the first software module, and store a correspondence among the authorization code, the identification information of the first software module, and the first cloud resource authorization specification in a first correspondence.

Step 902: The serverless platform receives a running request for the first software module, where the running request includes the authorization code, and obtains the first cloud resource authorization specification from the cloud transaction platform based on the authorization code.

In step 902, the serverless platform further downloads the first software module associated with the first user. Optionally, the serverless platform obtains the download address of the first software module from the correspondence between the user identifier and the download address on the cloud transaction platform based on the user identifier of the first user, and downloads the first software module from the cloud transaction platform based on the download address.

In step 902, the first user triggers the running request for the first software module to the serverless platform by activating the first software module on the serverless platform. The serverless platform receives the running request, and obtains the first cloud resource authorization specification from the cloud transaction platform based on the authorization code included in the running request. Optionally, the first cloud resource authorization specification may be obtained in the following two manners: a manner a and a manner b.

Manner a: The identification information of the first software module is allocated by the cloud transaction platform, and the correspondence among the authorization code, the identification information of the first software module, and the first cloud resource authorization specification is stored in the first correspondence. The serverless platform sends an obtaining request to the cloud transaction platform, where the obtaining request includes the authorization code and the identification information of the first software module. The cloud transaction platform receives the obtaining request, obtains the first cloud resource authorization specification from the first correspondence based on the authorization code and the identification information of the first software module, and sends the first cloud resource authorization specification to the serverless platform. The serverless platform receives the first cloud resource authorization specification.

Manner b: The identification information of the first software module is not allocated by the cloud transaction platform, and the correspondence between the authorization code and the first cloud resource authorization specification is stored in the first correspondence. When the first user activates the first software module for the first time, the serverless platform allocates the identification information of the first software module, and sends an obtaining request to the cloud transaction platform, where the obtaining request includes the authorization code and the identification information of the first software module. The cloud transaction platform receives the obtaining request, obtains the correspondence including the authorization code and the first cloud resource authorization specification from the first correspondence based on the authorization code, and sends the first cloud resource authorization specification to the serverless platform. The serverless platform receives the first cloud resource authorization specification.

In the manner b, the cloud transaction platform further stores the identification information of the first software module in the correspondence including the authorization code and the first cloud resource authorization specification. In this way, when the first user activates the first software module again, the serverless platform may obtain the first cloud resource authorization specification in the manner a.

Step 903: The serverless platform obtains a target resource specification configured by the first user, where the target resource specification defines a quantity of computing instances used to run the first software module and a computing instance processing capability.

The serverless platform allows the first user to configure the target resource specification used to run the software copy. Optionally, the serverless platform displays a configuration interface, the first user may configure the target resource specification in the configuration interface, and the serverless platform obtains the target resource specification from the configuration interface.

Step 904: When the target resource specification does not exceed the first cloud resource authorization specification, the serverless platform provisions a first computing instance set on the serverless platform based on the target resource specification, where the first computing instance set includes at least one computing instance.

In step 904, the serverless platform compares the first cloud resource authorization specification with the target resource specification, and when the target resource specification does not exceed the first cloud resource authorization specification, creates at least one computing instance on the serverless platform based on the target resource specification.

A quantity of computing instances included in the at least one created computing instance does not exceed a quantity of computing instances in the first cloud resource authorization specification, and a resource specification occupied by each created computing instance does not exceed a resource specification occupied by a single computing instance in the first cloud resource authorization specification.

In some embodiments, in step 904, when a sum of cloud resources occupied by a second computing instance set does not exceed the first cloud resource authorization specification, the serverless platform may alternatively create a first computing instance set on the cloud service platform based on the target resource specification. When the sum of cloud resources occupied by the second computing instance set exceeds the first cloud resource authorization specification, provisioning of the first computing instance set is rejected.

The second computing instance set includes the first computing instance set. Optionally, the second computing instance set may further include a third computing instance set, and the third computing instance set includes a computing instance on which the first software module related to the first user has been run.

If the first user triggers, for the first time, a container management and scheduling module to create a computing instance for the first software module, the first computing instance set is the same as the second computing instance set, and the sum of cloud resources occupied by the second computing instance set is equal to the target resource specification.

If the first user has previously triggered the serverless platform to create a computing instance for the first software module, that is, the serverless platform includes a computing instance used to run the first software module related to the first user, the serverless platform further stores a third correspondence. The third correspondence includes the user identifier of the first user, the identification information of the first software module, and the third computing instance set, and the third computing instance set includes a computing instance on which the first software module related to the first user has been run. In this way, the container management and scheduling module obtains the third computing instance set from the third correspondence based on the user identifier of the first user and the identification information of the first software module; and obtains a resource specification occupied by each computing instance in the third computing instance set from the serverless platform, and accumulates the resource specification occupied by each computing instance in the third computing instance set and the target resource specification, to obtain the sum of cloud resources occupied by the second computing instance set.

Step 905: The serverless platform runs the first software module based on the at least one computing instance included in the first computing instance set.

In some embodiments, the first user may not need to enter the target resource specification. In this way, when obtaining the first cloud resource authorization specification, the serverless platform creates at least one computing instance on the serverless platform based on the first cloud resource authorization specification.

In some embodiments, the first cloud resource authorization specification further includes a running range, and the serverless platform further obtains a running range authorized for the first software module; and runs the first software module within the running range.

In this embodiment of this application, the serverless platform obtains the first cloud resource authorization specification based on the authorization code corresponding to the first software module, creates at least one computing instance on the serverless platform based on the first cloud resource authorization specification, and runs the first software module by using the at least one computing instance. The at least one computing instance is created on the serverless platform based on the first cloud resource authorization specification, so that a sum of cloud resources occupied by the at least one computing instance does not exceed the first cloud resource authorization specification. In this way, expansion of a cloud resource occupied by the at least one computing instance used to run the first software module can be prevented, to avoid expanding a use range of the first software module, protect interests of a software vendor, and avoid causing an economic loss to the software vendor.

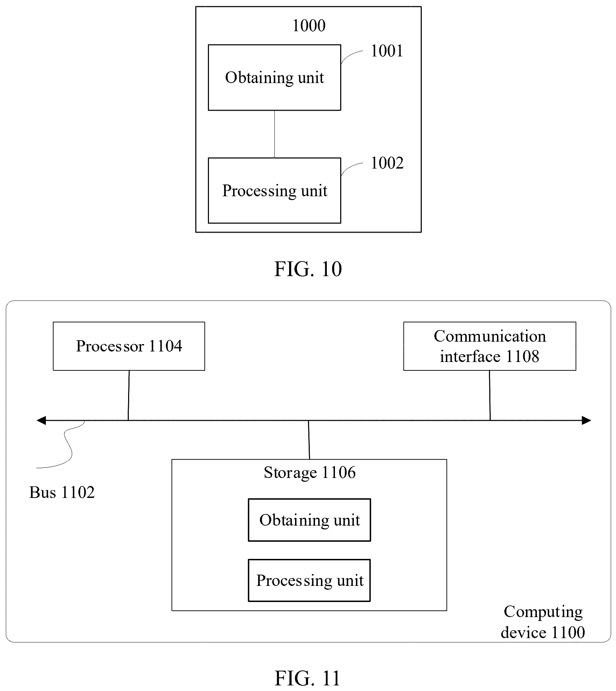

With reference to FIG. 10, an embodiment of this application provides a software module running apparatus 1000. The apparatus 1000 is used on the cloud transaction platform or the cloud service platform in the cloud system shown in FIG. 1, FIG. 2, FIG. 3, or FIG. 4. With reference to FIG. 10, the apparatus 1000 includes:
an obtaining unit 1001, configured to obtain a running request for a first software module, where the first software module is associated with a first user, and the running request for the first software module is to run the first software module that has been deployed in a first computing instance set, or deploy the first software module in a provisioned first computing instance set for running, or provision a first computing instance set for the first software module and run the first software module by using the first computing instance set, where
the obtaining unit 1001 is further configured to obtain a first cloud resource authorization specification corresponding to the first software module; and
a processing unit 1002, configured to: if a sum of cloud resources occupied by a second computing instance set does not exceed the first cloud resource authorization specification, run the first software module by using the first computing instance set, where the second computing instance set includes the first computing instance set, and the second computing instance set includes at least one computing instance.

Optionally, for a detailed implementation process in which the obtaining unit 1001 obtains the running request, refer to related content in step 502 in the method 500 shown in FIG. 5, step 605 in the method 600 shown in FIG. 6, step 704 in the method 700 shown in FIG. 7, step 804 in the method 800 shown in FIG. 8, or step 902 in the method 900 shown in FIG. 9. Details are not described herein again.

Optionally, for a detailed implementation process in which the obtaining unit 1001 obtains the first cloud resource authorization specification, refer to related content in step 502 in the method 500 shown in FIG. 5, step 605 in the method 600 shown in FIG. 6, step 705 in the method 700 shown in FIG. 7, step 804 in the method 800 shown in FIG. 8, or step 902 in the method 900 shown in FIG. 9. Details are not described herein again.

Optionally, for a detailed implementation process in which the processing unit 1002 runs the first software module by using the first computing instance set, refer to related content in step 503 in the method 500 shown in FIG. 5, step 607 in the method 600 shown in FIG. 6, step 706 in the method 700 shown in FIG. 7, step 806 in the method 800 shown in FIG. 8, or step 905 in the method 900 shown in FIG. 9. Details are not described herein again.

Optionally, the second computing instance set further includes a third computing instance set, and the third computing instance set includes at least one computing instance on which the first software module has been run.

Optionally, the running request for the first software module is to run the first software module that has been deployed in the first computing instance set; and the processing unit 1002 is further configured to:
if the sum of cloud resources occupied by the second computing instance set exceeds the first cloud resource authorization specification, reject running of the first software module.

Optionally, for a detailed implementation process in which the processing unit 1002 rejects running of the first software module, refer to related content in step 607 in the method 600 shown in FIG. 6. Details are not described herein again.

Optionally, the running request for the first software module is to deploy the first software module in the provisioned first computing instance set for running; and the processing unit 1002 is further configured to: if the sum of cloud resources occupied by the second computing instance set exceeds the first cloud resource authorization specification, reject deployment of the first software module.

Optionally, for a detailed implementation process in which the processing unit 1002 rejects deployment of the first software module, refer to related content in step 503 in the method 500 shown in FIG. 5. Details are not described herein again.

Optionally, the running request for the first software module is to provision the first computing instance set for the first software module and run the first software module by using the first computing instance set; and the processing unit 1002 is further configured to: if the sum of cloud resources occupied by the second computing instance set exceeds the first cloud resource authorization specification, reject provisioning of the first computing instance set.

Optionally, for a detailed implementation process in which the processing unit 1002 rejects provisioning of the first software module, refer to related content in step 904 in the method 900 shown in FIG. 9. Details are not described herein again.

Optionally, the obtaining unit 1001 is configured to:
obtain an authorization code corresponding to the first software module; and
obtain the first cloud resource authorization specification from a first correspondence based on the authorization code, where the first correspondence includes the authorization code and the first cloud resource authorization specification.

Optionally, for a detailed implementation process in which the obtaining unit 1001 obtains the authorization code, refer to related content in step 605 in the method 600 shown in FIG. 6, step 704 in the method 700 shown in FIG. 7, step 804 in the method 800 shown in FIG. 8, or step 902 in the method 900 shown in FIG. 9. Details are not described herein again.

Optionally, for a detailed implementation process in which the obtaining unit 1001 obtains the first cloud resource authorization specification, refer to related content in step 502 in the method 500 shown in FIG. 5, step 605 in the method 600 shown in FIG. 6, step 705 in the method 700 shown in FIG. 7, step 804 in the method 800 shown in FIG. 8, or step 902 in the method 900 shown in FIG. 9. Details are not described herein again.

Optionally, the first correspondence further includes identification information of the first software module, and the obtaining unit 1001 is configured to:
obtain the identification information of the first software module; and
obtain the first cloud resource authorization specification from the first correspondence based on the authorization code and the identification information.

Optionally, the obtaining unit 1001 is configured to:
obtain an authorization code corresponding to the first software module, where the authorization code is obtained by encrypting the first cloud resource authorization specification by using a private key; and
decrypt the authorization code by using a public key corresponding to the private key, to obtain the first cloud resource authorization specification.

Optionally, the first cloud resource authorization specification includes a quantity of computing instances and a resource specification occupied by a single computing instance; and
a case in which the sum of cloud resources occupied by the second computing instance set does not exceed the first cloud resource authorization specification includes:
a quantity of computing instances included in the second computing instance set does not exceed the quantity of computing instances, and a resource specification occupied by each computing instance included in the second computing instance set does not exceed the resource specification occupied by the single computing instance.

Optionally, the computing instance included in the second computing instance set is a container, the container included in the second computing instance set belongs to at least one container set, and the first cloud resource authorization specification further includes one or more of the following: a quantity of serving gateways, a quantity of namespaces, a quantity of container sets, or a quantity of machines; and the case in which the sum of cloud resources occupied by the second computing instance set does not exceed the first cloud resource authorization specification further includes one or more of the following cases: a quantity of serving gateways that communicate with the container included in the second computing instance set does not exceed the quantity of serving gateways, a quantity of the at least one container set does not exceed the quantity of container sets, a quantity of machines on which the container included in the second computing instance set is located does not exceed the quantity of machines, or a quantity of namespaces to which the at least one container set belongs does not exceed the quantity of namespaces.

Optionally, the first cloud resource authorization specification includes one or more of the following: a quantity of embedded neural-network processing units NPUs, a quantity of graphics processing units GPUs, a quantity of central processing units CPUs, a quantity of CPU cores, a memory size, a network bandwidth size, a quantity of network interfaces, or a storage volume size.

Optionally, the obtaining unit 1001 is further configured to obtain a running range authorized for the first software module; and
the processing unit 1002 is configured to run the first software module by using the first computing instance set within the running range.

Optionally, for a detailed implementation process in which the obtaining unit 1001 obtains the running range authorized for the first software module, refer to related content in step 905 in the method 900 shown in FIG. 9. Details are not described herein again.

Optionally, for a detailed implementation process in which the processing unit 1002 runs the first software module by using the first computing instance set within the running range, refer to related content in step 905 in the method 900 shown in FIG. 9. Details are not described herein again.

Optionally, the running range includes one or more of the following: total running duration of the first software module, a total quantity of invocations of the first software module, or a total concurrency quantity of the first software module.

Optionally, the second computing instance set includes one or more of the following computing instances: a virtual machine, a bare metal server, or a container.

In this embodiment of this application, the first cloud resource authorization specification is a resource specification authorized for running of the first software module, and the second computing instance set includes the first computing instance set. Therefore, the obtaining unit obtains the running request for the first software module; and obtains the first cloud resource authorization specification corresponding to the first software module; and when the sum of cloud resources occupied by the second computing instance set does not exceed the first cloud resource authorization specification, the processing unit runs the first software module by using the first computing instance set. In this way, expansion of a resource occupied for running the first software module can be avoided, to avoid expanding a use range of the first software module, and avoid causing an economic loss to a software vendor.

With reference to FIG. 11, an embodiment of this application provides a computing device 1100. For example, the computing device 1100 may be a device included on the cloud service platform 101 or a device included on the cloud transaction platform 102 in the cloud system 100 shown in FIG. 1, FIG. 2, FIG. 3, or FIG. 4, or a device on the cloud transaction platform in the method 500 shown in FIG. 5, or a device on the cloud service platform in the method 600 shown in FIG. 6, or a device on the cloud service platform in the method 700 shown in FIG. 7, or is a device on the cloud service platform in the method 800 shown in FIG. 8, or a device on the cloud service platform in the method 900 shown in FIG. 9.

As shown in FIG. 11, the computing device 1100 includes a bus 1102, a processor 1104, a storage 1106, and a communication interface 1108. The processor 1104, the storage 1106, and the communication interface 1108 communicate with each other through the bus 1102. The computing device 1100 may be a server or a terminal device. It should be understood that quantities of processors and storages in the computing device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 11, but this does not mean that there is only one bus or only one type of bus. The bus 1102 may include a path for transferring information between components (for example, the storage 1106, the processor 1104, and the communication interface 1108) in the computing device 1100.

The processor 1104 may include any one or more of processors, for example, a central processing unit (central processing unit, CPU), a graphics processing unit (graphics processing unit, GPU), a microprocessor (microprocessor, MP), or a digital signal processor (digital signal processor, DSP).

The storage 1106 may include a volatile memory (volatile memory), for example, a random access memory (random access memory, RAM). The storage 1106 may alternatively include a non-volatile memory (non-volatile memory), for example, a read-only memory (read-only memory, ROM), a flash memory, a hard disk drive (hard disk drive, HDD), or a solid state drive (solid state drive, SSD).

With reference to FIG. 11, the storage 1106 stores executable program code, and the processor 1104 executes the executable program code to separately implement functions of the obtaining unit 1001 and the processing unit 1002 in the apparatus 1000 shown in FIG. 10, to implement the method provided in any one of the foregoing embodiments. In other words, the storage 1106 stores instructions for performing the method provided in any one of the foregoing embodiments.

The communication interface 1108 uses a transceiver module, for example, but not limited to, a network interface card or a transceiver, to implement communication between the computing device 1100 and another device or a communication network.

An embodiment of this application further provides a cluster. The cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

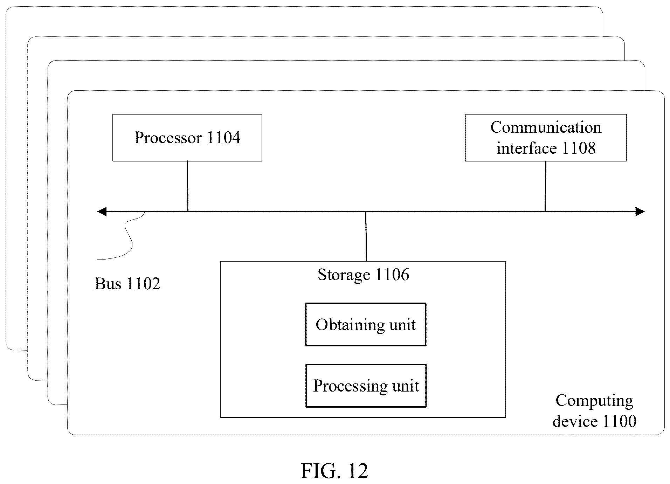

As shown in FIG. 12, the cluster includes at least one computing device 1100. Storages 1106 in one or more computing devices 1100 in the cluster may store same instructions for performing the method provided in any one of the foregoing embodiments.

In some possible implementations, the storages 1106 in the one or more computing devices 1100 in the cluster may alternatively separately store some instructions for performing the foregoing software module running method. In other words, a combination of the one or more computing devices 1100 may jointly execute instructions for performing the software module running method provided in any one of the foregoing embodiments.

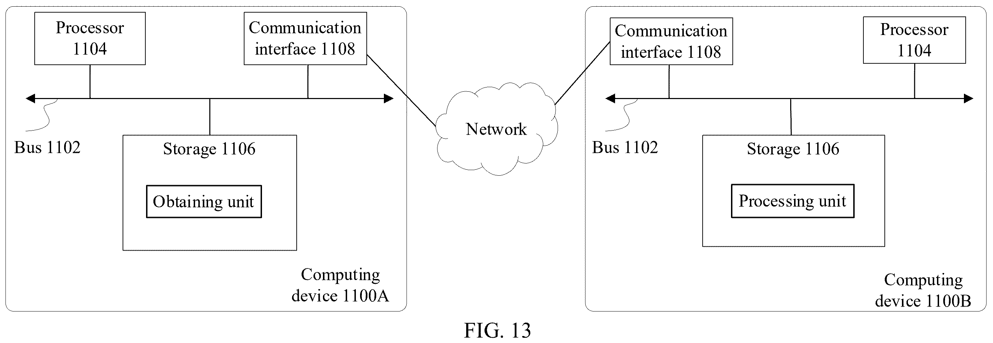

In some possible implementations, the one or more computing devices in the cluster may be connected through a network. The network may be a wide area network, a local area network, or the like. FIG. 13 shows a possible implementation. As shown in FIG. 13, two computing devices 1100A and 1100B are connected through a network. Specifically, a connection to the network is implemented through a communication interface in each computing device.

In this possible implementation, a storage 1106 in the computing device 1100A stores instructions for performing the function of the obtaining unit 1001 in the embodiment shown in FIG. 10. In addition, a storage 1106 in the computing device 1100B stores instructions for performing the function of the processing unit 1002 in the embodiment shown in FIG. 10.

It should be understood that functions of the computing device 1100A shown in FIG. 13 may alternatively be completed by a plurality of computing devices 1100. Similarly, functions of the computing device 1100B may alternatively be implemented by a plurality of computing devices 1100.

An embodiment of this application further provides another cluster. For a connection relationship between computing devices in the cluster, similarly refer to a connection manner of the cluster in FIG. 13. A difference is that storages 1106 in one or more computing devices 1100 in the cluster may store same instructions for performing the method provided in any one of the foregoing embodiments.

In some possible implementations, the storages 1106 in the one or more computing devices 1100 in the cluster may alternatively separately store some instructions for performing the method provided in any one of the foregoing embodiments. In other words, a combination of the one or more computing devices 1100 may jointly execute instructions for performing the method provided in any one of the foregoing embodiments.

An embodiment of this application further provides a computer program product including instructions. The computer program product may be software or a program product that includes instructions and that can be run on a computing device or be stored in any usable medium. When the computer program product is run on at least one computing device, the at least one computing device is enabled to perform the method provided in any one of the foregoing embodiments.

An embodiment of this application further provides a computer-readable storage medium. The computer-readable storage medium may be any usable medium that can be stored in a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions indicate the computing device to perform the method provided in any one of the foregoing embodiments.

A person of ordinary skill in the art may understand that all or some of the steps in the foregoing embodiments may be implemented by hardware or by a program by instructing related hardware. The program may be stored in a computer-readable storage medium. The storage medium may be a read-only memory, a magnetic disk, an optical disc, or the like.

The foregoing descriptions are merely example embodiments of this application, but are not intended to limit this application. Any modification, equivalent replacement, improvement, or the like made without departing from the spirit and principle of this application shall fall within the protection scope of this application.

## Claims

1. A software module running method, wherein the method comprises:
obtaining a running request for a first software module, wherein the first software module is associated with a first user, the running request for the first software module is to run the first software module that has been deployed in a first computing instance set, or deploy the first software module in a provisioned first computing instance set for running, or provision a first computing instance set for the first software module and run the first software module by using the first computing instance set, and the first computing instance set comprises at least one computing instance;
obtaining a first cloud resource authorization specification corresponding to the first software module; and
if a sum of cloud resources occupied by a second computing instance set does not exceed the first cloud resource authorization specification, running the first software module by using the first computing instance set, wherein the second computing instance set comprises the first computing instance set.

2. The method according to claim 1, wherein the second computing instance set further comprises a third computing instance set, and the third computing instance set comprises at least one computing instance on which the first software module has been run.

3. The method according to claim 1 or 2, wherein the running request for the first software module is to run the first software module that has been deployed in the first computing instance set; and the method further comprises:
if the sum of cloud resources occupied by the second computing instance set exceeds the first cloud resource authorization specification, rejecting running of the first software module.

4. The method according to claim 1 or 2, wherein the running request for the first software module is to deploy the first software module in the provisioned first computing instance set for running; and the method further comprises:
if the sum of cloud resources occupied by the second computing instance set exceeds the first cloud resource authorization specification, rejecting deployment of the first software module.

5. The method according to claim 1 or 2, wherein the running request for the first software module is to provision the first computing instance set for the first software module and run the first software module by using the first computing instance set; and the method further comprises:
if the sum of cloud resources occupied by the second computing instance set exceeds the first cloud resource authorization specification, rejecting provisioning of the first computing instance set.

6. The method according to any one of claims 1 to 5, wherein obtaining the first cloud resource authorization specification corresponding to the first software module comprises:
obtaining an authorization code corresponding to the first software module; and
obtaining the first cloud resource authorization specification from a first correspondence based on the authorization code, wherein the first correspondence comprises the authorization code and the first cloud resource authorization specification.

7. The method according to claim 6, wherein the first correspondence further comprises identification information of the first software module, and the method further comprises:
obtaining the identification information of the first software module; and
obtaining the first cloud resource authorization specification from the first correspondence based on the authorization code comprises:
obtaining the first cloud resource authorization specification from the first correspondence based on the authorization code and the identification information.

8. The method according to any one of claims 1 to 5, wherein obtaining the first cloud resource authorization specification corresponding to the first software module comprises:
obtaining an authorization code corresponding to the first software module, wherein the authorization code is obtained by encrypting the first cloud resource authorization specification by using a private key; and
decrypting the authorization code by using a public key corresponding to the private key, to obtain the first cloud resource authorization specification.

9. The method according to any one of claims 1 to 8, wherein the first cloud resource authorization specification comprises a quantity of computing instances and a resource specification occupied by a single computing instance; and
a case in which the sum of cloud resources occupied by the second computing instance set does not exceed the first cloud resource authorization specification comprises:
a quantity of computing instances comprised in the second computing instance set does not exceed the quantity of computing instances, and a resource specification occupied by each computing instance comprised in the second computing instance set does not exceed the resource specification occupied by the single computing instance.

10. The method according to claim 9, wherein the computing instance comprised in the second computing instance set is a container, the container comprised in the second computing instance set belongs to at least one container set, and the first cloud resource authorization specification further comprises one or more of the following: a quantity of serving gateways, a quantity of namespaces, a quantity of container sets, or a quantity of machines; and
the case in which the sum of cloud resources occupied by the second computing instance set does not exceed the first cloud resource authorization specification further comprises one or more of the following cases: a quantity of serving gateways that communicate with the container comprised in the second computing instance set does not exceed the quantity of serving gateways, a quantity of the at least one container set does not exceed the quantity of container sets, a quantity of machines on which the container comprised in the second computing instance set is located does not exceed the quantity of machines, or a quantity of namespaces to which the at least one container set belongs does not exceed the quantity of namespaces.

11. The method according to any one of claims 1 to 10, wherein the first cloud resource authorization specification comprises one or more of the following: a quantity of embedded neural-network processing units NPUs, a quantity of graphics processing units GPUs, a quantity of central processing units CPUs, a quantity of CPU cores, a memory size, a network bandwidth size, a quantity of network interfaces, or a storage volume size.

12. The method according to any one of claims 1 to 11, wherein the method further comprises:
obtaining a running range authorized for the first software module; and
running the first software module by using the first computing instance set comprises:
running the first software module by using the first computing instance set within the running range.

13. The method according to claim 12, wherein the running range comprises one or more of the following: total running duration of the first software module, a total quantity of invocations of the first software module, or a total concurrency quantity of the first software module.

14. The method according to any one of claims 1 to 9, wherein the second computing instance set comprises one or more of the following computing instances: a virtual machine, a bare metal server, or a container.

15. A software module running apparatus, wherein the apparatus comprises:
an obtaining unit, configured to obtain a running request for a first software module, wherein the first software module is associated with a first user, the running request for the first software module is to run the first software module that has been deployed in a first computing instance set, or deploy the first software module in a provisioned first computing instance set for running, or provision a first computing instance set for the first software module and run the first software module by using the first computing instance set, and the first computing instance set comprises at least one computing instance, wherein
the obtaining unit is further configured to obtain a first cloud resource authorization specification corresponding to the first software module; and
a processing unit, configured to: if a sum of cloud resources occupied by a second computing instance set does not exceed the first cloud resource authorization specification, run the first software module by using the first computing instance set, wherein the second computing instance set comprises the first computing instance set.

16. The apparatus according to claim 15, wherein the second computing instance set further comprises a third computing instance set, and the third computing instance set comprises at least one computing instance on which the first software module has been run.

17. The apparatus according to claim 15 or 16, wherein the running request for the first software module is to run the first software module that has been deployed in the first computing instance set; and the processing unit is further configured to:
if the sum of cloud resources occupied by the second computing instance set exceeds the first cloud resource authorization specification, reject running of the first software module.

18. The apparatus according to claim 15 or 16, wherein the running request for the first software module is to deploy the first software module in the provisioned first computing instance set for running; and the processing unit is further configured to:
if the sum of cloud resources occupied by the second computing instance set exceeds the first cloud resource authorization specification, reject deployment of the first software module.

19. The apparatus according to claim 15 or 16, wherein the running request for the first software module is to provision the first computing instance set for the first software module and run the first software module by using the first computing instance set; and the processing unit is further configured to:
if the sum of cloud resources occupied by the second computing instance set exceeds the first cloud resource authorization specification, reject provisioning of the first computing instance set.

20. The apparatus according to any one of claims 15 to 19, wherein the obtaining unit is configured to:
obtain an authorization code corresponding to the first software module; and
obtain the first cloud resource authorization specification from a first correspondence based on the authorization code, wherein the first correspondence comprises the authorization code and the first cloud resource authorization specification.

21. The apparatus according to claim 20, wherein the first correspondence further comprises identification information of the first software module, and the obtaining unit is configured to:
obtain the identification information of the first software module; and
obtain the first cloud resource authorization specification from the first correspondence based on the authorization code and the identification information.

22. The apparatus according to any one of claims 15 to 19, wherein the obtaining unit is configured to:
obtain an authorization code corresponding to the first software module, wherein the authorization code is obtained by encrypting the first cloud resource authorization specification by using a private key; and
decrypt the authorization code by using a public key corresponding to the private key, to obtain the first cloud resource authorization specification.

23. The apparatus according to any one of claims 15 to 22, wherein the first cloud resource authorization specification comprises a quantity of computing instances and a resource specification occupied by a single computing instance; and
a case in which the sum of cloud resources occupied by the second computing instance set does not exceed the first cloud resource authorization specification comprises:
a quantity of computing instances comprised in the second computing instance set does not exceed the quantity of computing instances, and a resource specification occupied by each computing instance comprised in the second computing instance set does not exceed the resource specification occupied by the single computing instance.

24. The apparatus according to claim 23, wherein the computing instance comprised in the second computing instance set is a container, the container comprised in the second computing instance set belongs to at least one container set, and the first cloud resource authorization specification further comprises one or more of the following: a quantity of serving gateways, a quantity of namespaces, a quantity of container sets, or a quantity of machines; and
the case in which the sum of cloud resources occupied by the second computing instance set does not exceed the first cloud resource authorization specification further comprises one or more of the following cases: a quantity of serving gateways that communicate with the container comprised in the second computing instance set does not exceed the quantity of serving gateways, a quantity of the at least one container set does not exceed the quantity of container sets, a quantity of machines on which the container comprised in the second computing instance set is located does not exceed the quantity of machines, or a quantity of namespaces to which the at least one container set belongs does not exceed the quantity of namespaces.

25. The apparatus according to any one of claims 15 to 24, wherein the first cloud resource authorization specification comprises one or more of the following: a quantity of embedded neural-network processing units NPUs, a quantity of graphics processing units GPUs, a quantity of central processing units CPUs, a quantity of CPU cores, a memory size, a network bandwidth size, a quantity of network interfaces, or a storage volume size.

26. The apparatus according to any one of claims 15 to 25, wherein
the obtaining unit is further configured to obtain a running range authorized for the first software module; and
the processing unit is configured to run the first software module by using the first computing instance set within the running range.

27. The apparatus according to claim 26, wherein the running range comprises one or more of the following: total running duration of the first software module, a total quantity of invocations of the first software module, or a total concurrency quantity of the first software module.

28. The apparatus according to any one of claims 15 to 23, wherein the second computing instance set comprises one or more of the following computing instances: a virtual machine, a bare metal server, or a container.

29. A computing device cluster, wherein the cluster comprises at least one computing device, each of the at least one computing device comprises at least one processor and at least one storage, the at least one storage stores computer-readable instructions, and the at least one processor executes the computer-readable instructions, to enable the cluster to perform the method according to any one of claims 1 to 14.

30. A computer storage medium, wherein the computer storage medium stores a computer program, and when the computer program is executed by a processor, the method according to any one of claims 1 to 14 is implemented.

31. A computer program product, wherein the computer program product comprises a computer program, and when the computer program is executed by a processor, the method according to any one of claims 1 to 14 is implemented.
